# EUROPEAN PATENT APPLICATION

(11) **EP 4 841 756 A1**
(43) Date of publication of application: **18.11.2026**
(21) Application number: 24939397.6
(22) Date of filing: 12.10.2024
(51) Int. Cl.: H01M 10/6556, H01M 10/6568, H01M 50/289

(54) **BATTERY AND ELECTRIC DEVICE**

(30) Priority: 21.05.2024 CN 202421116432 U
(71) Applicant: Contemporary Amperex Technology Co., Limited, Ningde, Fujian 352100 (CN)
(72) Inventor: WANG, Liangyi, Ningde, Fujian 352100 (CN); WANG, Yalei, Ningde, Fujian 352100 (CN); QIN, Feng, Ningde, Fujian 352100 (CN); WANG, Peng, Ningde, Fujian 352100 (CN); WANG, Zhi, Ningde, Fujian 352100 (CN)
(74) Representative: Kraus & Lederer PartGmbB
(86) International application number: PCT/CN2024/124505
(87) International publication number: WO 2025/241383

(57) **Abstract**

The present application relates to the technical field of batteries, and provides a battery and an electric device. The battery comprises a case and battery cells. An assembly cavity is formed inside the case. The battery cells are accommodated in the assembly cavity. The case is provided with a first wall; the first wall comprises a heat management part used for managing the temperature of the battery cells; a flow channel is formed inside the heat management part; the flow channel is used for accommodating a heat exchange medium; the heat management part is provided with joints; the joints are communicated with the flow channel; and the joints are located outside the assembly cavity. On one hand, the battery facilitates convenient connection between the joints and other parts, so as to reduce the difficulty in battery assembly and the difficulty in joint maintenance. On the other hand, the available space in the case can be expanded, helping to improve the internal space utilization rate of the case; in addition, the phenomenon that the heat exchange medium enters the assembly cavity when leakage occurs at the connection positions between the joints and the flow channel and at the connection positions between the joints and the other parts can be reduced, reducing the risk of short-circuit of the battery during use.

## Description

### CROSS-REFERENCE TO RELATED APPLICATIONS

This application claims priority to the Chinese Patent Application No. 2024211164324, filed on May 21, 2024 and entitled "BATTERY AND ELECTRIC APPARATUS", which is incorporated herein by reference in its entirety.

### TECHNICAL FIELD

This application relates to the field of battery technology, and specifically, to a battery and an electric apparatus.

### BACKGROUND

In recent years, new energy vehicles have experienced leapfrog development. In the field of electric vehicles, traction batteries, as power sources of electric vehicles, play an irreplaceable and important role. A battery includes a box and a battery cell accommodated in the box. As core components of new energy vehicles, batteries have high requirements in terms of service life and operational reliability. The battery cell inside the battery generates a large amount of heat during continuous charge and discharge cycles. Therefore, a thermal management component configured to regulate the temperature of the battery cells is disposed in the box of the battery to alleviate the temperature rise inside the battery. However, existing batteries are prone to liquid leakage during use, which leads to the risks such as short circuits in the batteries, thus adversely affecting the improvement of the operational reliability of the batteries.

### SUMMARY

Embodiments of this application provide a battery and an electric apparatus, which can effectively improve the operational reliability of the battery.

According to a first aspect, an embodiment of this application provides a battery including a box and a battery cell, where an assembly cavity is formed inside the box; the battery cell is accommodated in the assembly cavity; the box has a first wall; the first wall includes a thermal management component configured to manage temperature of the battery cell; a flow channel is formed inside the thermal management component; the flow channel is configured to accommodate a heat exchange medium; the thermal management component is provided with a joint; the joint is in communication with the flow channel; and the joint is located outside the assembly cavity.

In the above technical solution, the first wall of the box includes the thermal management component, and the flow channel configured to accommodate the heat exchange medium is formed inside the thermal management component, so that the thermal management component is a structure integrated on the box, thereby making the thermal management component be a part of the first wall of the box. Thus, heat exchange with the battery cell accommodated in the assembly cavity can be achieved through the thermal management component. This can implement the management of the temperature of the battery cell and also simplify and lighten the box, thereby reducing the risk of temperature rise in the battery during use and reducing the weight of the battery. The joint in communication with the flow channel is disposed outside the assembly cavity of the box, so that a connection position between the joint and the flow channel and a connection position between the joint and other components are both located outside the assembly cavity. On the one hand, the battery with this structure facilitates butt connection and assembly of the joint with other components, reducing the assembly difficulty of the battery and reducing the difficulty of subsequent maintenance of the joint, thereby reducing the later maintenance cost of the battery. On the other hand, the usable space inside the box can be expanded, helping to increase the internal space utilization rate of the box. Moreover, when leakage occurs at the connection position between the joint and the flow channel or at the connection position between the joint and other components, the phenomenon of the heat exchange medium entering the assembly cavity can be alleviated, thereby reducing the risk of short circuit in the battery during use and helping to improve the operational reliability of the battery.

In some embodiments, along a thickness direction of the thermal management component, the thermal management component has a first surface and a second surface disposed opposite each other, the first surface forms a part of a cavity wall surface of the assembly cavity, and the joint is connected to the second surface.

In the above technical solution, the joint is connected to the second surface of the thermal management component facing away from the assembly cavity, so that the joint is located on a side of the thermal management component facing away from the assembly cavity. On the one hand, the battery with this structure facilitates assembly of the joint with other components, helping to reduce the assembly difficulty of the battery, and preventing the thickness of the thermal management component from being affected by the connection position of the joint, thereby facilitating further optimization of the thickness of the thermal management component to increase the space utilization rate of the battery. On the other hand, the joint and the assembly cavity may be located on two sides of the thermal management component respectively, so that when leakage occurs at the connection position between the joint and the flow channel or at the connection position between the joint and other components, the phenomenon of the heat exchange medium entering the assembly cavity can be further alleviated, thereby further reducing the risk of short circuit in the battery during use, and helping to improve the operational reliability of the battery.

In some embodiments, the first wall further includes a mounting frame, where the mounting frame is provided with a mounting hole; the mounting hole extends through the mounting frame along the thickness direction of the thermal management component; and the thermal management component is disposed in the mounting hole and connected to the mounting frame.

In the above technical solution, the first wall is further provided with the mounting frame configured to mount the thermal management component, so as to facilitate assembly and fastening of the thermal management component. The thermal management component is disposed in the mounting hole of the mounting frame and connected to the mounting frame. On the one hand, this can further improve the reliability and stability of the thermal management component assembled on the mounting frame, and reduce the assembly difficulty between the thermal management component and the mounting frame. On the other hand, the mounting frame can also provide a certain protective effect on the thermal management component, thereby reducing the risk of the thermal management component being worn or bumped, and helping to prolong the service life of the thermal management component.

In some embodiments, the box further includes a second wall, where the second wall is connected to the mounting frame; along a thickness direction of the second wall, the second wall is spaced apart from the thermal management component; and the thickness direction of the second wall is perpendicular to the thickness direction of the thermal management component.

In the above technical solution, the second wall of the box is connected to the mounting frame of the first wall and spaced apart from the thermal management component, so that the second wall and the thermal management component are structures connected and assembled with each other through the mounting frame. Thus, the weight of the second wall or the impact force received by the second wall does not directly act on the thermal management component, thereby reducing the load on the thermal management component, reducing the risk of damage to the thermal management component, and reducing the assembly difficulty between the second wall and the first wall.

In some embodiments, along the thickness direction of the thermal management component, a limiting member is connected to a side of the mounting frame facing the assembly cavity; the limiting member is located between the second wall and the thermal management component in the thickness direction of the second wall; and the limiting member is configured for the battery cell to abut against along the thickness direction of the second wall.

In the above technical solution, the limiting member is connected to the side of the mounting frame facing the assembly cavity, and the limiting member can be configured for the battery cell to abut against in the thickness direction of the second wall, so that a certain limiting effect can be exerted on the battery cell accommodated in the assembly cavity. On the one hand, this can alleviate the phenomenon of the battery cell shaking or shifting during use. On the other hand, this can reduce the collision between the battery cell and the second wall. In addition, the limiting member is located between the second wall and the thermal management component in the thickness direction of the second wall, so that the space between the second wall and the thermal management component can be utilized, thereby helping to increase the internal space utilization rate of the battery, and reducing the phenomenon that stress received by the limiting member is transmitted to the thermal management component.

In some embodiments, the battery further includes an insulating member, where the insulating member is disposed between the limiting member and the battery cell along the thickness direction of the second wall.

In the above technical solution, the insulating member is disposed between the limiting member and the battery cell. On the one hand, this can improve the insulation isolation effect between the limiting member and the battery cell, helping to reduce the risk of short circuit between the battery cell and the limiting member. On the other hand, this allows the insulating member to provide a certain buffering effect between the limiting member and the battery cell.

In some embodiments, along the thickness direction of the thermal management component, the battery cell is disposed in correspondence with the thermal management component, and a projection of the insulating member does not overlap with a projection of the thermal management component.

In the above technical solution, the battery cell is disposed in correspondence with the battery cell in the thickness direction of the thermal management component, so that the heat exchange effect between the thermal management component and the battery cell is improved, thereby improving the effect of the thermal management component in managing the temperature of the battery cell. In addition, the projection of the insulating member in the thickness direction of the thermal management component is set not to overlap with the projection of the thermal management component in the thickness direction of the thermal management component, so that the insulating member does not occupy the space of the thermal management component in the thickness direction of the thermal management component corresponding to the battery cell, thereby helping to increase the energy density of the battery.

In some embodiments, along the thickness direction of the second wall, a spacing space is formed between the limiting member and the second wall.

In the above technical solution, in the thickness direction of the second wall, the spacing space is formed between the limiting member and the second wall, so that the limiting member and the second wall are structures spaced apart in the thickness direction of the second wall. On the one hand, the spacing space can provide a buffering effect between the second wall and the limiting member, so that when the second wall is subjected to an external impact, the phenomenon that the second wall directly transmits the impact force to the limiting member can be alleviated, thereby reducing the external impact force received by the battery cell. On the other hand, the other components inside the battery can be disposed in the spacing space between the limiting member and the second wall, helping to increase the internal space utilization rate of the battery.

In some embodiments, the battery further includes an adapter tube, where the adapter tube is configured to deliver the heat exchange medium; the adapter tube is disposed on the mounting frame; the adapter tube has a first end and a second end opposite to each other; the first end is in butt connection with the joint; the second end is located on a side of the second wall facing away from the thermal management component in the thickness direction of the second wall; and the second end is configured to be in communication with an external component.

In the above technical solution, the battery is further provided with the adapter tube, and the adapter tube is disposed on the mounting frame. The first end of the adapter tube is in butt connection with the joint, so that the adapter tube is in communication with the flow channel inside the thermal management component through the joint, thereby enabling the adapter tube to input the heat exchange medium into the flow channel or allow the heat exchange medium in the flow channel to flow out. In addition, the second end of the adapter tube is located on the side of the second wall facing away from the thermal management component in the thickness direction of the second wall, so that the connection position between the adapter tube and the joint and the connection position between the adapter tube and the external component are separated from each other. On the one hand, this can further reduce the risk of the heat exchange medium entering the assembly cavity after leakage. On the other hand, this facilitates assembly and connection of the adapter tube with the external component, thereby helping to reduce the assembly difficulty between the adapter tube and the external component.

In some embodiments, the mounting frame is provided with a mounting channel, where the mounting channel extends to a hole wall surface of the mounting hole; and at least part of the adapter tube extends through the mounting channel.

In the above technical solution, the mounting channel is provided on the mounting frame, the mounting channel extends through the hole wall surface of the mounting hole, and at least part of the adapter tube extends through the mounting channel, so that the adapter tube is in butt connection with the joint. The battery with this structure enables a part of the adapter tube to be located inside the mounting frame. On the one hand, this can improve the stability and reliability of the adapter tube mounted on the mounting frame. On the other hand, the mounting frame can also provide a certain protective effect on the adapter tube, thereby reducing the risk of the adapter tube being worn or bumped, and helping to prolong the service life of the adapter tube.

In some embodiments, the mounting channel extends along the thickness direction of the second wall, and the mounting channel has one end extending to the hole wall surface of the mounting hole and another end extending to an outer surface of the mounting frame.

In the above technical solution, the mounting channel is configured as a structure extending along the thickness direction of the second wall, and two ends of the mounting channel extend through the hole wall surface of the mounting hole and the outer surface of the mounting frame respectively, so that the adapter tube can be assembled with the mounting frame simply by inserting the adapter tube into the mounting channel along the thickness direction of the second wall, thereby helping to reduce the assembly difficulty between the adapter tube and the mounting frame.

In some embodiments, along the thickness direction of the thermal management component, the thermal management component has a first surface and a second surface disposed opposite each other, where the first surface forms a part of a cavity wall surface of the assembly cavity; the joint is connected to the second surface; and a projection of the joint in the thickness direction of the thermal management component is located in the mounting hole.

In the above technical solution, the joint is disposed on the side of the thermal management component facing away from the assembly cavity, and the projection of the joint in the thickness direction of the thermal management component is set to be located in the mounting hole, so that the mounting frame can avoid the joint, thereby reducing the interference effect between the joint and the mounting frame, facilitating subsequent maintenance of the joint, and facilitating assembly of the joint with other components, thereby helping to reduce the assembly difficulty between the joint and other components.

In some embodiments, the mounting frame has a third surface facing away from the assembly cavity in the thickness direction of the thermal management component; the mounting hole extends to the third surface; and in the thickness direction of the thermal management component, along a direction from the first surface to the second surface, the joint does not extend beyond the third surface.

In the above technical solution, the joint is configured not to extend beyond the side of the mounting frame facing away from the assembly cavity in the direction from the first surface to the second surface, so that the joint is entirely located in the mounting hole. Thus, the mounting frame can also provide a certain protective effect on the joint, reducing the phenomenon of the joint being worn or bumped, thereby helping to prolong the service life of the joint.

In some embodiments, the mounting hole includes a first hole segment and a second hole segment arranged along the thickness direction of the thermal management component, where the first hole segment is located on a side of the second hole segment close to the assembly cavity; a hole wall surface of the first hole segment and a hole wall surface of the second hole segment are connected to each other through a step surface; the step surface is disposed facing the assembly cavity; and the thermal management component is located in the first hole segment, and the thermal management component abuts against the step surface.

In the above technical solution, the mounting hole has the first hole segment and the second hole segment arranged along the thickness direction of the thermal management component, the hole wall surface of the first hole segment and the hole wall surface of the second hole segment are connected through the step surface, and the step surface is disposed facing the assembly cavity in the thickness direction of the thermal management component. The thermal management component is disposed in the first hole segment and abuts against the step surface. On the one hand, this facilitates the mounting of the thermal management component in the mounting hole of the mounting frame, thereby helping to reduce the assembly difficulty between the thermal management component and the mounting frame. On the other hand, the step surface can also provide a certain limiting effect and positioning effect on the thermal management component in the thickness direction of the thermal management component, thereby helping to improve the stability and reliability of the thermal management component mounted on the mounting frame.

In some embodiments, the mounting frame has a third surface facing away from the assembly cavity and a fourth surface facing the assembly cavity in the thickness direction of the thermal management component; the first hole segment extends to the fourth surface; the second hole segment extends to the third surface; and in the thickness direction of the thermal management component, along a direction from the third surface to the fourth surface, the thermal management component does not extend beyond the fourth surface.

In the above technical solution, the thermal management component is configured not to extend beyond the side of the mounting frame facing the assembly cavity in the direction from the third surface to the fourth surface. In other words, the thermal management component does not extend beyond an end of the mounting hole extending through the fourth surface in the thickness direction of the thermal management component, so that the phenomenon of the thermal management component protruding from the fourth surface of the mounting frame can be alleviated, thereby helping to improve the protective effect of the mounting frame on the thermal management component.

In some embodiments, along the thickness direction of the thermal management component, the thermal management component has a first surface facing the assembly cavity, and the first surface is flush with the fourth surface.

In the above technical solution, the first surface of the thermal management component facing the assembly cavity and the fourth surface of the mounting frame facing the assembly cavity are set as structures that are flush with each other. On the one hand, manufacturing and processing are facilitated. On the other hand, the phenomenon of unevenness of the cavity wall surface of the assembly cavity can be reduced, thereby helping to reduce the risk of collision between the battery cell and a sharp part of the mounting frame or a sharp part of the thermal management component.

In some embodiments, the box further includes a support member, where the support member is disposed in the mounting hole and connected to the hole wall surface of the mounting hole; along the thickness direction of the thermal management component, the support member is located on the side of the thermal management component facing away from the assembly cavity and abuts against the thermal management component, and projections of the support member and the joint in the thickness direction of the thermal management component do not overlap with each other.

In the above technical solution, the support member is disposed in the mounting hole, and the support member is located on the side of the thermal management component facing away from the assembly cavity in the thickness direction of the thermal management component and abuts against the thermal management component, so that the support member can also provide a certain supporting effect on the thermal management component, thereby helping to reduce the risks such as deformation of the thermal management component during use. In addition, the support member can also provide a certain protective effect on the thermal management component, helping to alleviate the phenomenon of direct collision between the thermal management component and the external environment. Moreover, the projections of the support member and the joint in the thickness direction of the thermal management component are set not to overlap with each other, so that the interference effect between the support member and the joint can also be reduced.

In some embodiments, the thermal management component is welded to the mounting frame.

In the above technical solution, the thermal management component is welded to the mounting frame, helping to improve the connection reliability between the thermal management component and the mounting frame, thereby improving the stability and reliability of the thermal management component assembled on the mounting frame.

In some embodiments, the joint is welded to the thermal management component.

In the above technical solution, the joint is welded to the thermal management component, helping to improve the connection reliability between the joint and the thermal management component, thereby improving the stability and reliability of the joint assembled on the thermal management component.

In some embodiments, the thermal management component includes a first plate body and a second plate body, where the first plate body and the second plate body are stacked and connected along the thickness direction of the thermal management component, and the first plate body and the second plate body jointly define the flow channel.

In the above technical solution, the thermal management component is provided with the first plate body and the second plate body that are stacked and connected along the thickness direction of the thermal management component, and the first plate body and the second plate body jointly define the flow channel for accommodating the heat exchange medium, so that the flow channel is formed inside the thermal management component. The thermal management component with this structure has a simple structure and is convenient to process and manufacture.

In some embodiments, along the thickness direction of the thermal management component, the first plate body has a first plane facing the second plate body, a groove is provided on a side of the second plate body facing the first plate body, and a groove wall surface of the groove and the first plane jointly define the flow channel.

In the above technical solution, the groove is provided on the side of the second plate body facing the first plate body, so that after the first plate body and the second plate body are stacked and connected to each other, the first plane of the first plate body and the groove wall surface of the groove of the second plate body can jointly form the flow channel of the thermal management component. The structure is simple and easy to implement, and has high processing efficiency.

In some embodiments, along the thickness direction of the thermal management component, a protrusion is formed on a side of the second plate body facing away from the first plate body at a position corresponding to the groove.

In the above technical solution, the protrusion is provided on the side of the second plate body facing away from the first plate body along the thickness direction of the thermal management component at the position corresponding to the groove, so that the groove is a structure that can be formed on the second plate body by a stamping process, thereby helping to reduce the difficulty of forming the groove on the second plate body, and helping to improve the difficulty of processing and forming the groove on the second plate body.

In some embodiments, along the thickness direction of the thermal management component, the second plate body is located on a side of the first plate body facing away from the assembly cavity.

In the above technical solution, the second plate body is disposed on the side of the first plate body facing away from the assembly cavity, so that the protrusion formed by the second plate body is located outside the assembly cavity, thereby allowing a surface of the first plate body facing the assembly cavity to be set as a plane. The battery with this structure can reduce the interference effect between the protrusion on the second plate body and the battery cell accommodated in the assembly cavity, thereby helping to reduce the difficulty of assembling the battery cell in the assembly cavity.

In some embodiments, the box includes a first box body and a second box body, where the first box body and the second box body fit each other along the thickness direction of the thermal management component to jointly define the assembly cavity, and the first box body includes the first wall.

In the above technical solution, the box is set to include the first box body and the second box body, and the first box body and the second box body fit each other along the thickness direction of the thermal management component to jointly define the assembly cavity, so that the box with this structure can reduce the difficulty of assembling the battery cell into the assembly cavity of the box and can reduce the manufacturing difficulty of the box.

In some embodiments, the first box body further includes two second walls, where the two second walls are both connected to the first wall; the second box body includes a third wall and two fourth walls; the two fourth walls are both connected to the third wall; the first wall and the third wall are disposed opposite each other in a first direction; the two second walls are disposed opposite each other in a second direction; the two fourth walls are disposed opposite each other in a third direction; the first direction is parallel to the thickness direction of the thermal management component; and the first direction, the second direction, and the third direction are perpendicular to each other.

In the above technical solution, the first box body includes the first wall and the two second walls connected to the first wall, and the two second walls are disposed opposite each other along the second direction. The second box body includes the third wall and the two fourth walls connected to the third wall, and the two fourth walls are disposed opposite each other along the third direction, so that the first box body and the second box body are each formed as a structure similar to a "U" shape. Thus, on the one hand, this helps the first box body and the second box body to fit each other along the thickness direction of the thermal management component to jointly define the assembly cavity for accommodating the battery cell. On the other hand, this can reduce the manufacturing difficulty of the first box body and the second box body and facilitate subsequent maintenance of the battery cell accommodated in the box, thereby helping to reduce the later maintenance difficulty of the battery.

In some embodiments, along the third direction, the first wall is located between the two fourth walls, and two sides of the first wall are respectively connected to the two fourth walls.

In the above technical solution, the first wall is set as a structure located between the two fourth walls in the third direction, and two sides of the first wall in the third direction are respectively connected to the fourth walls, so that the two fourth walls form a structure that clamps the first wall in the third direction. On the one hand, this can improve the assembly stability between the first box body and the second box body of the box and facilitate assembly and connection of the first wall and the fourth wall from the third direction, thereby reducing the assembly difficulty between the first wall and the fourth wall. On the other hand, this allows a sealed interface between the first wall and the fourth wall to be a structure perpendicular to the third direction, thereby helping to improve the sealing effect between the first wall and the fourth wall.

According to a second aspect, an embodiment of this application further provides an electric apparatus including the above battery, where the battery is configured to provide electrical energy.

### BRIEF DESCRIPTION OF DRAWINGS

To describe the technical solutions in the embodiments of this application more clearly, the following briefly describes the accompanying drawings required to be used in the embodiments. It should be understood that the accompanying drawings below show merely some embodiments of this application and thus should not be considered as limitations on the scope. Those of ordinary skill in the art may still derive other related drawings from the accompanying drawings without creative efforts.
FIG. 1 is a schematic structural diagram of a vehicle according to some embodiments of this application;
FIG. 2 is an exploded view of a structure of a battery according to some embodiments of this application;
FIG. 3 is a schematic structural diagram of a first box body of a box according to some embodiments of this application;
FIG. 4 is an exploded view of a structure of a first box body of a box according to some embodiments of this application;
FIG. 5 is a partial cross-sectional view of a battery according to some embodiments of this application;
FIG. 6 is a partially enlarged view of part A of the battery shown in FIG. 5;
FIG. 7 is a partially enlarged view of part B of the battery shown in FIG. 5;
FIG. 8 is a schematic structural diagram of a thermal management component according to some embodiments of this application;
FIG. 9 is an exploded view of a structure of a thermal management component according to some embodiments of this application;
FIG. 10 is a front view of a thermal management component according to some embodiments of this application facing a second plate body in a first direction; and
FIG. 11 is a schematic structural diagram of a second box body of a box according to some embodiments of this application.

Reference signs: 1000. vehicle; 100. battery; 10. box; 11. assembly cavity; 12. first box body; 121. first wall; 1211. thermal management component; 1211a. flow channel; 1211b. joint; 1211c. first surface; 1211d. second surface; 1211e. first plate body; 1211f. second plate body; 1211g. first plane; 1211h. groove; 1211k. protrusion; 1212. mounting frame; 1212a. mounting hole; 1212b. mounting channel; 1212c. third surface; 1212d. fourth surface; 1212e. first hole segment; 1212f. second hole segment; 1212g. step surface; 122. second wall; 123. support member; 13. second box body; 131. third wall; 132. fourth wall; 14. spacing space; 20. battery cell; 30. adapter tube; 31. first end; 32. second end; 40. limiting member; 41. first limiting portion; 42. second limiting portion; 50. insulating member; 200. controller; 300. motor; X. thickness direction of thermal management component; Y. thickness direction of second wall; and Z. third direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, these embodiments described are some rather than all embodiments of this application. All other embodiments obtained by those of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application pertains. The terms used in the specification of this application are intended to merely describe the specific embodiments rather than to limit this application. The terms "include", "comprise", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Those of ordinary skill in the art can understand specific meanings of these terms in this application as suitable to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application typically indicates an "or" relationship between contextually associated objects.

In some embodiments of this application, like reference signs denote like components, and for brevity, in different embodiments, detailed descriptions of like components are not repeated. It should be understood that as shown in the accompanying drawings, sizes such as thicknesses, lengths, and widths of various components and sizes such as overall thicknesses, lengths, and widths of integrated apparatuses in the embodiments of this application are merely for illustrative purposes and should not constitute any limitations on this application.

In this application, "a plurality of" refers to two or more (including two).

In the embodiments of this application, a battery cell may be a secondary battery. The secondary battery refers to a battery cell whose active material can be activated for continuous use through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickelcadmium battery, and a lead-acid battery. This is not limited in this embodiment of this application.

A battery cell typically includes an electrode assembly. The electrode assembly includes a positive electrode, a negative electrode, and a separator. During charging and discharging of the battery cell, active ions (for example, lithium ions) are intercalated and deintercalated back and forth between the positive electrode and the negative electrode. The separator is disposed between the positive electrode and the negative electrode to prevent short circuits between the positive and negative electrodes and allow active ions to pass through.

In some embodiments, the positive electrode may be a positive electrode plate. The positive electrode plate may include a positive electrode current collector and a positive electrode active material provided on at least one surface of the positive electrode current collector.

In some embodiments, the negative electrode may be a negative electrode plate. The negative electrode plate may include a negative electrode current collector.

In some embodiments, the electrode assembly further includes a separator. The separator is disposed between the positive electrode and the negative electrode.

In some embodiments, the separator is a separation film. The separation film may be of various types, any known porous separation film with good chemical stability and mechanical stability may be used.

In some embodiments, the battery cell further includes an electrolyte. The electrolyte conducts ions between the positive and negative electrodes. The electrolyte may be in a liquid state, a gel state, or a solid state. The liquid electrolyte includes an electrolytic salt and a solvent.

In some embodiments, the electrode assembly is a wound structure. The positive electrode plate and the negative electrode plate are wound into the wound structure.

In some embodiments, the electrode assembly is a laminated structure.

As an example, a plurality of positive electrode plates and a plurality of negative electrode plates may be provided. The plurality of positive electrode plates and the plurality of negative electrode plates are alternately stacked.

As an example, a plurality of positive electrode plates may be provided. The negative electrode plate is folded to form a plurality of folded segments stacked with each other. One positive electrode plate is sandwiched between adjacent folded segments.

As an example, the positive electrode plate and the negative electrode plate are each folded to form a plurality of folded segments stacked with each other.

As an example, a plurality of separators may be provided and respectively disposed between any adjacent positive electrode plates or negative electrode plates.

As an example, the separators may be disposed consecutively and disposed between any adjacent positive electrode plates or negative electrode plates by folding or winding.

In some embodiments, the electrode assembly may be in a cylindrical shape, a flat shape, a polygonal-prism shape, or the like.

In some embodiments, the electrode assembly is provided with a tab. The tab can lead current out of the electrode assembly. The tab includes a positive tab and a negative tab.

In some embodiments, the battery cell may include a housing. The housing is configured to encapsulate components such as the electrode assembly and the electrolyte. The housing may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of another shape. The prismatic battery cell includes but is not limited to a square-shell battery cell, a blade-shaped battery cell, and a polygonal-prism battery. The polygonal-prism battery is, for example, a hexagonal-prism battery.

The battery mentioned in the embodiments of this application refers to a single physical module including one or more battery cells to provide higher voltage and capacity.

In some embodiments, the battery may be a battery module. When a plurality of battery cells are provided, the plurality of battery cells are arranged and fixed to form one battery module.

In some embodiments, the battery may be a battery pack. The battery pack includes a box and a battery cell. The battery cell or the battery module is accommodated in the box.

In some embodiments, the box may be used as a part of a chassis structure of a vehicle. For example, a part of the box may become at least part of the floor of the vehicle, or a part of the box may become at least part of the cross beam and longitudinal beam of the vehicle.

In some embodiments, the battery may be an energy storage apparatus. The energy storage apparatus includes an energy storage container, an energy storage cabinet, and the like.

With the outstanding advantages such as high energy density, low environmental pollution, high power density, long service life, wide adaptation range, and small self-discharge coefficient, batteries are an important part of current new energy development. For the development of battery technology, multiple design factors, for example, performance parameters such as energy density, cycle life, discharge capacity, and charge-discharge rate need to be considered. In addition, the safety of the battery also needs to be considered.

In battery technology, a battery typically includes a box and a plurality of battery cells arranged in the box. The plurality of battery cells are electrically connected to each other through a busbar, so that the plurality of battery cells form an entirety accommodated in the box in at least one of series connection and parallel connection, thereby increasing the capacity and power of the battery. However, the battery cells in the battery generate a large amount of heat during continuous charge and discharge cycles. In related art, to reduce the safety hazards caused by internal temperature rise of the battery during use, a thermal management component configured to exchange heat with the battery cells is typically disposed in the box to regulate the temperature of the battery cells, thereby alleviating the phenomenon of temperature rise inside the battery. However, a connection position between a joint of the thermal management component of the battery and a pipeline for delivering a heat exchange medium in related art is very prone to leakage of the heat exchange medium during use. The leaked heat exchange medium is in contact with the plurality of battery cells or other components in the box, thus easily causing the risk of short circuit between the plurality of battery cells, and resulting in low operational reliability of the battery.

Based on the above considerations, to solve the problem of low operational reliability of the battery, an embodiment of this application provides a battery. The battery includes a box and a battery cell. An assembly cavity is formed inside the box. The battery cell is accommodated in the assembly cavity. The box has a first wall. The first wall includes a thermal management component configured to manage the temperature of the battery cell. A flow channel is formed inside the thermal management component. The flow channel is configured to accommodate a heat exchange medium. The thermal management component is provided with a joint. The joint is in communication with the flow channel, and the joint is located outside the assembly cavity.

In the battery with this structure, the first wall of the box includes the thermal management component, and the flow channel configured to accommodate the heat exchange medium is formed inside the thermal management component, so that the thermal management component is a structure integrated on the box, thereby making the thermal management component be a part of the first wall of the box. Thus, heat exchange with the battery cell accommodated in the assembly cavity can be achieved through the thermal management component. This can implement the management of the temperature of the battery cell and also simplify and lighten the box, thereby reducing the risk of temperature rise in the battery during use and reducing the weight of the battery. The joint in communication with the flow channel is disposed outside the assembly cavity of the box, so that a connection position between the joint and the flow channel and a connection position between the joint and other components are both located outside the assembly cavity. On the one hand, the battery with this structure facilitates butt connection and assembly of the joint with other components, reducing the assembly difficulty of the battery and reducing the difficulty of subsequent maintenance of the joint, thereby reducing the later maintenance cost of the battery. On the other hand, the usable space inside the box can be expanded, helping to increase the internal space utilization rate of the box. Moreover, when leakage occurs at the connection position between the joint and the flow channel or at the connection position between the joint and other components, the phenomenon of the heat exchange medium entering the assembly cavity can be alleviated, thereby reducing the risk of short circuit in the battery during use and helping to improve the operational reliability of the battery.

The battery disclosed in this embodiment of this application may be used in, but is not limited to, electric apparatuses such as vehicles, ships, or aircrafts. The battery disclosed in this application may be used to constitute a power supply system of the electric apparatus, helping to alleviate the problem of short circuit in the battery during use, thereby improving the operational reliability of the battery.

An embodiment of this application provides an electric apparatus using a battery as a power source. The electric apparatus may be but is not limited to a mobile phone, a tablet, a laptop computer, an electric toy, an electric tool, an electric bicycle, an electric car, a ship, a spacecraft, or the like. The electric toy may include a fixed or mobile electric toy, such as a game console, an electric toy car, an electric toy ship, an electric toy airplane, and the like. Spacecraft may include an airplane, a rocket, a space shuttle, a spaceship, and the like.

For ease of description, an electric apparatus according to an embodiment of this application being a vehicle is used as an example for description of the following embodiments.

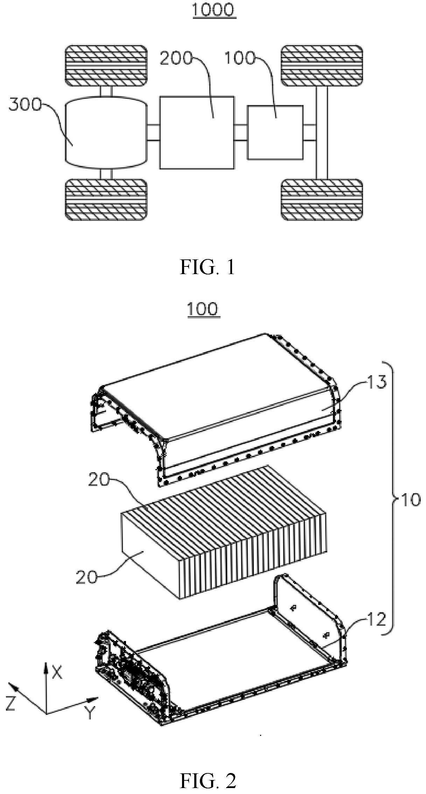

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid electric vehicle, or an extended-range electric vehicle. A battery 100 is disposed inside the vehicle 1000. The battery 100 may be disposed at the bottom of the vehicle 1000, at the head of the vehicle 1000, or at the tail of the vehicle 1000. The battery 100 may be configured to supply power to the vehicle 1000. For example, the battery 100 may be used as an operational power source or a service power source for the vehicle 1000. The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of this application, the battery 100 can be used as not only the operational power source or service power source for the vehicle 1000 but also a driving power source for the vehicle 1000, replacing or partially replacing fossil fuel or natural gas to provide driving traction for the vehicle 1000.

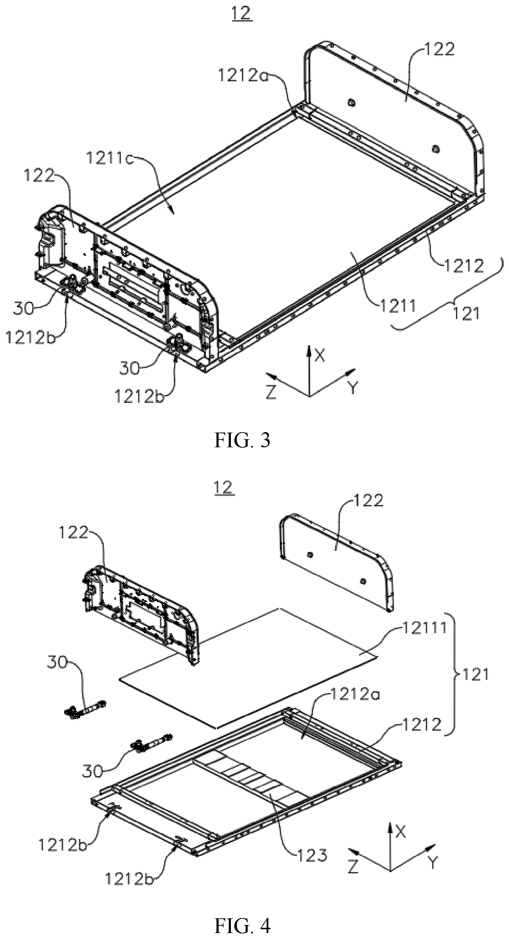

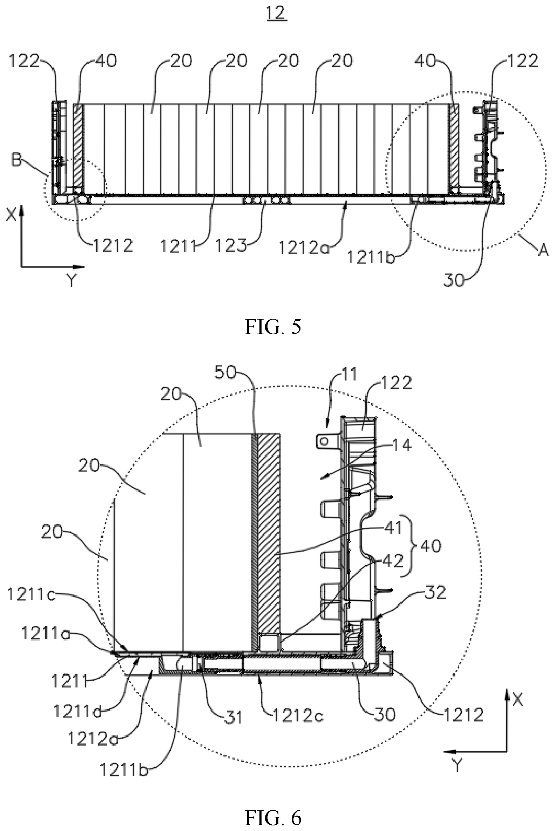

According to some embodiments of this application, referring to FIGs. 2, 3, 4, 5, and 6, FIG. 2 is an exploded view of a structure of a battery 100 according to some embodiments of this application. FIG. 3 is a schematic structural diagram of a first box body 12 of a box 10 according to some embodiments of this application. FIG. 4 is an exploded view of a structure of a first box body 12 of a box 10 according to some embodiments of this application. FIG. 5 is a partial cross-sectional view of a battery 100 according to some embodiments of this application. FIG. 6 is a partially enlarged view of part A of the battery 100 shown in FIG. 5. This application provides a battery 100. The battery 100 includes a box 10 and a battery cell 20. An assembly cavity 11 is formed inside the box 10. The battery cell 20 is accommodated in the assembly cavity 11. The box 10 has a first wall 121. The first wall 121 includes a thermal management component 1211 configured to manage the temperature of the battery cell 20. A flow channel 1211a is formed inside the thermal management component 1211. The flow channel 1211a is configured to accommodate a heat exchange medium. The thermal management component 1211 is provided with a joint 1211b. The joint 1211b is in communication with the flow channel 1211a, and the joint 1211b is located outside the assembly cavity 11.

The box 10 is configured to provide an assembly cavity 11 for the battery cell 20. The box 10 may adopt various structures. In some embodiments, referring to FIG. 2, the box 10 may include a first box body 12 and a second box body 13. The first box body 12 and the second box body 13 fit each other. The first box body 12 and the second box body 13 jointly define the assembly cavity 11 for accommodating the battery cell 20.

Optionally, the first box body 12 and the second box body 13 may have various structures. For example, in FIG. 2, the first box body 12 and the second box body 13 each have a "U"-shaped structure, so that the first box body 12 and the second box body 13 fit each other to jointly define the assembly cavity 11. Certainly, in other embodiments, the first box body 12 may alternatively be a hollow structure with an opening at one end. The second box body 13 may be a plate-shaped structure. The second box body 13 covers the opening side of the first box body 12, so that the first box body 12 and the second box body 13 jointly define the assembly cavity 11. Each of the first box body 12 and the second box body 13 may alternatively be a hollow structure with an opening on one side. The opening side of the first box body 12 is engaged with the opening side of the second box body 13.

Certainly, the box 10 formed by the first box body 12 and the second box body 13 may have various shapes, such as a cylinder, a cuboid, or a cube. For example, in FIG. 2, the shape of the box 10 formed by the first box body 12 and the second box body 13 is a cuboid.

In the battery 100, one or more battery cells 20 are disposed in the box 10. When a plurality of battery cells 20 are disposed in the box 10, the plurality of battery cells 20 may be connected in series, parallel, or series-parallel, where being connected in series-parallel means a combination of series and parallel connections of the plurality of battery cells 20. The plurality of battery cells 20 may be directly connected together in series, parallel, or series-parallel, and then an entirety formed by the plurality of battery cells 20 is accommodated in the box 10. Certainly, the battery 100 may alternatively be formed by a plurality of battery cells 20 being connected in series, parallel, or series-parallel first to form a battery module and then a plurality of battery modules being connected in series, parallel, or series-parallel to form an entirety which is accommodated in the box 10.

In some embodiments, the battery 100 may further include other structures. For example, the battery 100 may further include a busbar. The busbar is configured to be connected to the plurality of battery cells 20 so as to achieve an electrical connection between the plurality of battery cells 20.

Each battery cell 20 may be a secondary battery or a primary battery, or may be a lithium-sulfur battery, a sodium-ion battery, or a magnesium-ion battery, but is not limited thereto. Optionally, the battery cell 20 may have various shapes. For example, the battery cell 20 may be in a shape of a cuboid, a cylinder, a prism, or other shapes. For example, in FIG. 2, the battery cell 20 has a cuboid structure.

The box 10 has the first wall 121. The first wall 121 includes the thermal management component 1211 configured to manage the temperature of the battery cell 20. That is, the thermal management component 1211 is a part of the first wall 121 of the box 10, and the thermal management component 1211 is configured to exchange heat with the battery cell 20 so as to manage the temperature of the battery cell 20. In other words, the thermal management component 1211 is integrated on the box 10, so that the thermal management component 1211 becomes a part of the box 10. Thus, the thermal management component 1211 and other parts of the box 10 jointly define the assembly cavity 11 for accommodating the battery cell 20, and a surface of the thermal management component 1211 facing the assembly cavity 11 becomes a part of a cavity wall surface of the assembly cavity 11.

The flow channel 1211a is formed inside the thermal management component 1211, and the flow channel 1211a is configured to accommodate the heat exchange medium. In other words, the flow channel 1211a for the heat exchange medium to flow is formed inside the thermal management component 1211, so that the thermal management component 1211 can exchange heat with the battery cell 20 accommodated in the assembly cavity 11, thereby achieving the management of the temperature of the battery cell 20.

Optionally, the heat exchange medium may be various substances. For example, the heat exchange medium may be a gas, such as air or hydrogen. The heat exchange medium may alternatively be a liquid, such as water, a brine solution, or liquid nitrogen.

Optionally, along a thickness direction X of the thermal management component, a thickness of a region of the thermal management component 1211 where the flow channel 1211a is not formed is greater than or equal to 1 mm and less than or equal to 3 mm.

For example, referring to FIGs. 2 and 3, the first wall 121 is a bottom wall of the box 10. The first wall 121 is configured to support the battery cell 20 in the thickness direction X of the thermal management component. In other words, the thickness direction X of the thermal management component is a direction of gravity or approximately the direction of gravity, and the first wall 121 is located below the battery cell 20. Certainly, in other embodiments, the first wall 121 may alternatively be a side wall or top wall of the box 10.

The joint 1211b is in communication with the flow channel 1211a, and the joint 1211b is located outside the assembly cavity 11. In other words, the joint 1211b is disposed on a surface of the thermal management component 1211 located outside the assembly cavity 11, and the joint 1211b is in communication with the flow channel 1211a inside the thermal management component 1211. After the joint 1211b is in butt connection with other components, the heat exchange medium can flow into the flow channel 1211a of the thermal management component 1211 or the heat exchange medium in the flow channel 1211a of the thermal management component 1211 can flow out through the joint 1211b. For example, in FIGs. 3 and 4, the battery 100 further includes an adapter tube 30. The adapter tube 30 has one end in butt connection with the joint 1211b and another end in communication with a delivery pipe. The delivery pipe is configured to deliver the heat exchange medium.

Optionally, the joint 1211b may be connected to the thermal management component 1211 through various structures. For example, the joint 1211b may be connected to the thermal management component 1211 by a welding structure, a bonding structure, or a snap-fitting structure.

In the embodiments of this application, the thermal management component 1211 is provided with two joints 1211b. The two joints 1211b are in communication with two ends of the flow channel 1211a respectively. Correspondingly, the battery 100 includes two adapter tubes 30. Each adapter tube 30 is in communication with one joint 1211b. One adapter tube 30 is configured to input the heat exchange medium into the flow channel 1211a, and the other adapter tube 30 is configured to allow the heat exchange medium in the flow channel 1211a to flow out, so that the heat exchange medium forms a circulation in the flow channel 1211a of the thermal management component 1211.

In these embodiments, the first wall 121 of the box 10 includes the thermal management component 1211, and the flow channel 1211a configured to accommodate the heat exchange medium is formed inside the thermal management component 1211, so that the thermal management component 1211 is a structure integrated on the box 10, thereby making the thermal management component 1211 be a part of the first wall 121 of the box 10. Thus, heat exchange with the battery cell 20 accommodated in the assembly cavity 11 can be achieved through the thermal management component 1211. This can implement the management of the temperature of the battery cell 20 and also simplify and lighten the box 10, thereby reducing the risk of temperature rise in the battery 100 during use and reducing the weight of the battery 100. The joint 1211b in communication with the flow channel 1211a is disposed outside the assembly cavity 11 of the box 10, so that a connection position between the joint 1211b and the flow channel and a connection position between the joint 1211b and other components are both located outside the assembly cavity 11. On the one hand, the battery 100 with this structure facilitates butt connection and assembly of the joint 1211b with other components, reducing the assembly difficulty of the battery 100 and reducing the difficulty of subsequent maintenance of the joint 1211b, thereby reducing the later maintenance cost of the battery 100. On the other hand, the usable space inside the box 10 can be expanded, helping to increase the internal space utilization rate of the box 10. Moreover, when leakage occurs at the connection position between the joint 1211b and the flow channel or at the connection position between the joint 1211b and other components, the phenomenon of the heat exchange medium entering the assembly cavity 11 can be alleviated, thereby reducing the risk of short circuit in the battery 100 during use and helping to improve the operational reliability of the battery 100.

According to some embodiments of this application, referring to FIGs. 4 and 6, along the thickness direction X of the thermal management component, the thermal management component 1211 has a first surface 1211c and a second surface 1211d disposed opposite each other. The first surface 1211c forms a part of a cavity wall surface of the assembly cavity 11, and the joint 1211b is connected to the second surface 1211d.

The first surface 1211c and the second surface 1211d are surfaces of two sides of the thermal management component 1211 in the thickness direction X of the thermal management component, respectively. The first surface 1211c forms a part of the cavity wall surface of the assembly cavity 11. In other words, a surface of a side of the thermal management component 1211 facing the assembly cavity 11 is the first surface 1211c, so that the first surface 1211c constitutes a part of the cavity wall surface of the assembly cavity 11. Correspondingly, the second surface 1211d is a surface of a side of the thermal management component 1211 facing away from the assembly cavity 11 in the thickness direction X of the thermal management component.

The joint 1211b is connected to the second surface 1211d. In other words, the joint 1211b is disposed on the side of the thermal management component 1211 facing away from the assembly cavity 11 in the thickness direction X of the thermal management component. Certainly, in other embodiments, under the condition that the thickness of the thermal management component 1211 is satisfied, the joint 1211b may alternatively be connected to an outer peripheral surface of the thermal management component 1211 surrounding an outer side of the first surface 1211c.

In these embodiments, the joint 1211b is connected to the second surface 1211d of the thermal management component 1211 facing away from the assembly cavity 11, so that the joint 1211b is located on the side of the thermal management component 1211 facing away from the assembly cavity 11. On the one hand, the battery 100 with this structure facilitates assembly of the joint 1211b with other components, helping to reduce the assembly difficulty of the battery 100, and preventing the thickness of the thermal management component 1211 from being affected by the connection position of the joint 1211b, thereby facilitating further optimization of the thickness of the thermal management component 1211 to increase the space utilization rate of the battery 100. On the other hand, the joint 1211b and the assembly cavity 11 may be located on two sides of the thermal management component 1211 respectively, so that when leakage occurs at the connection position between the joint 1211b and the flow channel or at the connection position between the joint 1211b and other components, the phenomenon of the heat exchange medium entering the assembly cavity 11 can be further alleviated, thereby further reducing the risk of short circuit in the battery 100 during use, and helping to improve the operational reliability of the battery 100.

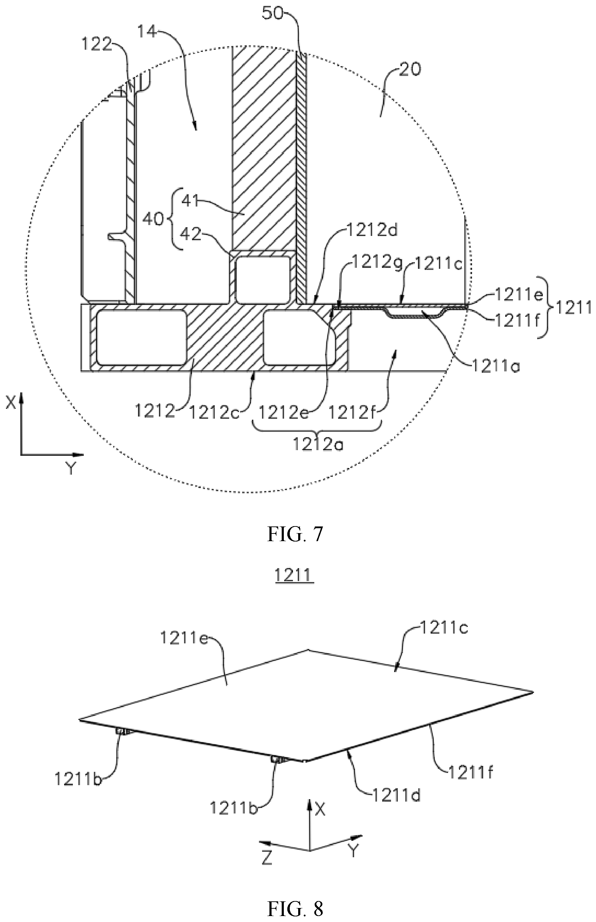

According to some embodiments of this application, referring to FIGs. 3, 4, 5, and 6 and further referring to FIG. 7, FIG. 7 is a partially enlarged view of part B of the battery 100 shown in FIG. 5. The first wall 121 may further include a mounting frame 1212. The mounting frame 1212 is provided with a mounting hole 1212a. The mounting hole 1212a extends through the mounting frame 1212 along the thickness direction X of the thermal management component. The thermal management component 1211 is disposed in the mounting hole 1212a and connected to the mounting frame 1212.

The mounting frame 1212 serves to provide mounting and support for the thermal management component 1211. The mounting frame 1212 is provided with the mounting hole 1212a. The mounting hole 1212a extends through the mounting frame 1212 along the thickness direction X of the thermal management component. In other words, the mounting hole 1212a extends along the thickness direction X of the thermal management component, and two ends of the mounting hole 1212a extend through surfaces of two sides of the mounting frame 1212 respectively.

The thermal management component 1211 is disposed in the mounting hole 1212a and connected to the mounting frame 1212. In other words, the mounting frame 1212 is a structure surrounding an outer side of the thermal management component 1211, and the mounting frame 1212 and the thermal management component 1211 are connected to each other, so that the thermal management component 1211 can block the mounting hole 1212a, thereby allowing the thermal management component 1211 and the mounting frame 1212 to jointly form the first wall 121 of the box 10.

Optionally, various connection structures may be provided between the thermal management component 1211 and the mounting frame 1212. For example, the thermal management component 1211 may be connected to the mounting frame 1212 through a welding structure, a bonding structure, a snap-fitting structure, a bolted connection structure, or the like.

In these embodiments, the first wall 121 is further provided with the mounting frame 1212 configured to mount the thermal management component 1211, so as to facilitate assembly and fastening of the thermal management component 1211. The thermal management component 1211 is disposed in the mounting hole 1212a of the mounting frame 1212 and connected to the mounting frame 1212. On the one hand, this can further improve the reliability and stability of the thermal management component 1211 assembled on the mounting frame 1212, and reduce the assembly difficulty between the thermal management component 1211 and the mounting frame 1212. On the other hand, the mounting frame 1212 can also provide a certain protective effect on the thermal management component 1211, thereby reducing the risk of the thermal management component 1211 being worn or bumped, and helping to prolong the service life of the thermal management component 1211.

According to some embodiments of this application, referring to FIGs. 3, 5, and 6, the box 10 may further include a second wall 122. The second wall 122 is connected to the mounting frame 1212. Along a thickness direction Y of the second wall, the second wall 122 is spaced apart from the thermal management component 1211. The thickness direction Y of the second wall is perpendicular to the thickness direction X of the thermal management component.

Each of the second wall 122 and the thermal management component 1211 is a structure connected to the mounting frame 1212, so that the mounting frame 1212 can not only provide mounting and support for the thermal management component 1211, but also provide mounting and support for the second wall 122.

For example, the second wall 122 is connected to a side of the mounting frame 1212 in the thickness direction X of the thermal management component. In FIGs. 3 and 5, the first box body 12 includes two second walls 122. The two second walls 122 are both connected to the side of the mounting frame 1212 in the thickness direction X of the thermal management component. The two second walls 122 are disposed opposite each other along the thickness direction Y of the second wall and located on two sides of the thermal management component 1211 respectively. The surfaces of the two second walls 122 facing each other form a part of the cavity wall surface of the assembly cavity 11.

Optionally, various connection structures may be provided between the second wall 122 and the mounting frame 1212. For example, the second wall 122 may be connected to the mounting frame 1212 through a welding structure, a bonding structure, a snap-fitting structure, a bolted connection structure, or the like.

Along the thickness direction Y of the second wall, the second wall 122 is spaced apart from the thermal management component 1211. In other words, there is a distance between the second wall 122 and the thermal management component 1211 in the thickness direction Y of the second wall, and the two are not in contact with each other. Correspondingly, in the embodiments where the first box body 12 includes two second walls 122, the thermal management component 1211 is located between the two second walls 122 in the thickness direction Y of the second wall, and the thermal management component 1211 is spaced apart from each of the two second walls 122.

It should be noted that in the embodiments where the box 10 includes the first box body 12 and the second box body 13, the second wall 122 is a part of the first box body 12. In other words, the first box body 12 includes the first wall 121 and the second wall 122.

In these embodiments, the second wall 122 of the box 10 is connected to the mounting frame 1212 of the first wall 121 and spaced apart from the thermal management component 1211, so that the second wall 122 and the thermal management component 1211 are structures connected and assembled with each other through the mounting frame 1212. Thus, the weight of the second wall 122 or the impact force received by the second wall 122 does not directly act on the thermal management component 1211, thereby reducing the load on the thermal management component 1211, reducing the risk of damage to the thermal management component 1211, and reducing the assembly difficulty between the second wall 122 and the first wall 121.

According to some embodiments of this application, referring to FIGs. 5, 6, and 7, along the thickness direction X of the thermal management component, a limiting member 40 is connected to a side of the mounting frame 1212 facing the assembly cavity 11. The limiting member 40 is located between the second wall 122 and the thermal management component 1211 in the thickness direction Y of the second wall. The limiting member 40 is configured for the battery cell 20 to abut against along the thickness direction Y of the second wall.

The limiting member 40 is connected to the side of the mounting frame 1212 facing the assembly cavity 11, that is, the limiting member 40 is connected to a fourth surface 1212d of the side of the mounting frame 1212 facing the assembly cavity 11.

The limiting member 40 is located between the second wall 122 and the thermal management component 1211 in the thickness direction Y of the second wall. For example, the limiting member 40 is spaced apart from the thermal management component 1211 in the thickness direction Y of the second wall, and the limiting member 40 is not in contact with the thermal management component 1211. In addition, the limiting member 40 is spaced apart from the second wall 122 in the thickness direction Y of the second wall, and the limiting member 40 is not in contact with the second wall 122.

The limiting member 40 is configured for the battery cell 20 to abut against in the thickness direction Y of the second wall. That is, the limiting member 40 is located on a side of the battery cell 20 in the thickness direction Y of the second wall and abuts against the battery cell 20. It should be noted that, in the embodiments where the battery 100 includes a plurality of battery cells 20 stacked along the thickness direction Y of the second wall, the limiting member 40 is located on at least one side of the plurality of battery cells 20 in the thickness direction Y of the second wall, and the limiting member 40 is configured for the plurality of battery cells 20 to abut against along the thickness direction Y of the second wall.

Optionally, one or more limiting members 40 may be connected to the side of the mounting frame 1212 facing the assembly cavity 11. For example, in the embodiments of this application, two limiting members 40 are connected to the side of the mounting frame 1212 facing the assembly cavity 11. The limiting members 40 are disposed between the thermal management component 1211 and each of the two second walls 122 in the thickness direction Y of the second wall. That is, the two limiting members 40 are spaced apart along the thickness direction Y of the second wall, and the two limiting members 40 are located on two sides of the thermal management component 1211 in the thickness direction Y of the second wall respectively. A plurality of battery cells 20 are disposed between the two limiting members 40 along the thickness direction Y of the second wall.

In some embodiments, referring to FIGs. 6 and 7, the limiting member 40 may include a first limiting portion 41 and a second limiting portion 42. The first limiting portion 41 and the second limiting portion 42 are stacked and connected to each other along the thickness direction X of the thermal management component. The second limiting portion 42 is connected to the fourth surface 1212d of the side of the mounting frame 1212 facing the assembly cavity 11.

Various connection structures are provided between the first limiting portion 41 and the second limiting portion 42, such as a bolted connection structure, a welding structure, or a snap-fitting structure. Similarly, various connection structures are also provided between the second limiting portion 42 and the mounting frame 1212. For example, in FIG. 7, the second limiting portion 42 and the mounting frame 1212 are formed as an integrated structure. That is, the second limiting portion 42 and the mounting frame 1212 are a structure made by an integral forming process, such as stamping or casting. Certainly, in other embodiments, the second limiting portion 42 and the mounting frame 1212 may alternatively be separate structures. Correspondingly, the second limiting portion 42 may be connected to the mounting frame 1212 through a bolted connection structure, a welding structure, a snap-fitting structure, or the like. It should be noted that, in an embodiment where the battery 100 includes a battery module, the battery module includes a plurality of battery cells 20. Correspondingly, the first limiting portion 41 may be an end plate of the battery module.

Optionally, a projection of the battery cell 20 in the thickness direction Y of the second wall is located within the limiting member 40.

For example, the first limiting portion 41 is a plate-shaped structure extending along a third direction Z. The second limiting portion 42 is a strip-shaped structure extending along the third direction Z. The third direction Z is perpendicular to the thickness direction X of the thermal management component and the thickness direction Y of the second wall.

It should be noted that the structure of the limiting member 40 is not limited to this. In other embodiments, the limiting member 40 may alternatively have other structures. For example, the limiting member 40 may be a plate-shaped structure as a whole, that is, the first limiting portion 41 and the second limiting portion 42 of the limiting member 40 are an integrated structure. In these embodiments, the limiting member 40 and the mounting frame 1212 may be formed as an integrated structure or may be separate structures.

In these embodiments, the limiting member 40 is connected to the side of the mounting frame 1212 facing the assembly cavity 11, and the limiting member 40 can be configured for the battery cell 20 to abut against in the thickness direction Y of the second wall, so that a certain limiting effect can be exerted on the battery cell 20 accommodated in the assembly cavity 11. On the one hand, this can alleviate the phenomenon of the battery cell 20 shaking or shifting during use. On the other hand, this can reduce the collision between the battery cell 20 and the second wall 122. In addition, the limiting member 40 is located between the second wall 122 and the thermal management component 1211 in the thickness direction Y of the second wall, so that the space between the second wall 122 and the thermal management component 1211 can be utilized, thereby helping to increase the internal space utilization rate of the battery 100, and reducing the phenomenon that stress received by the limiting member 40 is transmitted to the thermal management component 1211.

According to some embodiments of this application, referring to FIGs. 6 and 7, the battery 100 may further include an insulating member 50. The insulating member 50 is disposed between the limiting member 40 and the battery cell 20 along the thickness direction Y of the second wall.

The insulating member 50 provides insulation and isolation between the battery cell 20 and the limiting member 40. The insulating member 50 may be made of various materials. For example, the material of the insulating member 50 may be rubber, silicone, plastic, or the like.

For example, the insulating member 50 is an insulating gasket disposed between the battery cell 20 and the limiting member 40. It should be noted that in an embodiment where the limiting member 40 is disposed on each of two sides of the plurality of battery cells 20 in the thickness direction Y of the second wall, the battery 100 may include two insulating members 50. One insulating member 50 is disposed between each limiting member 40 and the plurality of battery cells 20.

In these embodiments, the insulating member 50 is disposed between the limiting member 40 and the battery cell 20. On the one hand, this can improve the insulation isolation effect between the limiting member 40 and the battery cell 20, helping to reduce the risk of short circuit between the battery cell 20 and the limiting member 40. On the other hand, this allows the insulating member 50 to provide a certain buffering effect between the limiting member 40 and the battery cell 20.

In some embodiments, still referring to FIGs. 6 and 7, along the thickness direction X of the thermal management component, the battery cell 20 is disposed in correspondence with the thermal management component 1211, and a projection of the insulating member 50 does not overlap with a projection of the thermal management component 1211.

Along the thickness direction X of the thermal management component, the battery cell 20 is disposed in correspondence with the thermal management component 1211. In other words, the battery cell 20 is assembled in a region where the thermal management component 1211 is located in the box 10. That is, at least part of the projection of the battery cell 20 in the thickness direction X of the thermal management component is located within the thermal management component 1211. If in an embodiment where the thermal management component 1211 is located at a bottom of the battery cell 20, the battery cell 20 is a structure placed on the thermal management component 1211.

Along the thickness direction X of the thermal management component, the projection of the insulating member 50 does not overlap with the projection of the thermal management component 1211. In other words, the insulating member 50 and the thermal management component 1211 are spaced apart in the thickness direction Y of the second wall.

In these embodiments, the battery cell 20 is disposed in correspondence with the battery cell 20 in the thickness direction X of the thermal management component, so that the heat exchange effect between the thermal management component 1211 and the battery cell 20 is improved, thereby improving the effect of the thermal management component 1211 in managing the temperature of the battery cell 20. In addition, the projection of the insulating member 50 in the thickness direction X of the thermal management component is set not to overlap with the projection of the thermal management component 1211 in the thickness direction X of the thermal management component, so that the insulating member 50 does not occupy the space of the thermal management component 1211 in the thickness direction X of the thermal management component corresponding to the battery cell 20, thereby helping to increase the energy density of the battery 100.

In some embodiments, referring to FIGs. 6 and 7, along the thickness direction Y of the second wall, a spacing space 14 is formed between the limiting member 40 and the second wall 122. In other words, the limiting member 40 and the second wall 122 are structures spaced apart in the thickness direction Y of the second wall, so that a space between the limiting member 40 and the second wall 122 is the spacing space 14.

For example, the spacing space 14 formed between the limiting member 40 and the second wall 122 may be used for accommodating other components such as a wiring harness and a battery management system in the battery 100.

In these embodiments, in the thickness direction Y of the second wall, the spacing space 14 is formed between the limiting member 40 and the second wall 122, so that the limiting member 40 and the second wall 122 are structures spaced apart in the thickness direction Y of the second wall. On the one hand, the spacing space 14 can provide a buffering effect between the second wall 122 and the limiting member 40, so that when the second wall 122 is subjected to an external impact, the phenomenon that the second wall 122 directly transmits the impact force to the limiting member 40 can be alleviated, thereby reducing the external impact force received by the battery cell 20. On the other hand, the other components inside the battery 100 can be disposed in the spacing space 14 between the limiting member 40 and the second wall 122, helping to increase the internal space utilization rate of the battery 100.

According to some embodiments of this application, referring to FIGs. 3, 4, 5, and 6, the battery 100 may further include an adapter tube 30. The adapter tube 30 is configured to deliver the heat exchange medium. The adapter tube 30 is disposed on the mounting frame 1212. The adapter tube 30 has a first end 31 and a second end 32 opposite each other. The first end 31 is in butt connection with the joint 1211b. The second end 32 is located on a side of the second wall 122 facing away from the thermal management component 1211 in the thickness direction Y of the second wall. The second end 32 is configured to be in communication with an external component.

The external component is a delivery pipe configured to provide or recover the heat exchange medium. The second end 32 of the adapter tube 30 is in communication with the delivery pipe, so that the adapter tube 30 allows the heat exchange medium to enter the flow channel 1211a or allow the heat exchange medium in the flow channel 1211a to flow out.

In the embodiments where the thermal management component 1211 is provided with two joints 1211b, and the two joints 1211b are in communication with two ends of the flow channel 1211a respectively, the battery 100 includes two adapter tubes 30. The two adapter tubes 30 are in butt connection with the two joints 1211b respectively, and the two adapter tubes 30 are in communication with the two delivery pipes respectively.

The adapter tube 30 has the first end 31 and the second end 32 opposite each other, and first end 31 is in butt connection with the joint 1211b. In other words, openings at two ends of the adapter tube 30 in its extension direction are the first end 31 and the second end 32 respectively, and the first end 31 is in communication with the joint 1211b.

The second end 32 is located on the side of the second wall 122 facing away from the thermal management component 1211 in the thickness direction Y of the second wall. In other words, an end of the adapter tube 30 away from the joint 1211b in its extension direction extends to the side of the second wall 122 facing away from the thermal management component 1211 in the thickness direction Y of the second wall.

In these embodiments, the battery 100 is further provided with the adapter tube 30, and the adapter tube 30 is disposed on the mounting frame 1212. The first end 31 of the adapter tube 30 is in butt connection with the joint 1211b, so that the adapter tube 30 is in communication with the flow channel 1211a inside the thermal management component 1211 through the joint 1211b, thereby enabling the adapter tube 30 to input the heat exchange medium into the flow channel 1211a or allow the heat exchange medium in the flow channel 1211a to flow out. In addition, the second end 32 of the adapter tube 30 is located on the side of the second wall 122 facing away from the thermal management component 1211 in the thickness direction Y of the second wall, so that the connection position between the adapter tube 30 and the joint 1211b and the connection position between the adapter tube 30 and the external component are separated from each other. On the one hand, this can further reduce the risk of the heat exchange medium entering the assembly cavity 11 after leakage. On the other hand, this facilitates assembly and connection of the adapter tube 30 with the external component, thereby helping to reduce the assembly difficulty between the adapter tube 30 and the external component.

According to some embodiments of this application, referring to FIGs. 4, 5, and 6, the mounting frame 1212 is provided with a mounting channel 1212b. The mounting channel 1212b extends to a hole wall surface of the mounting hole 1212a. At least part of the adapter tube 30 extends through the mounting channel 1212b.

The mounting channel 1212b serves to allow the adapter tube 30 to be inserted therein, so as to assemble and fix the adapter tube 30. In the embodiments where the battery 100 includes two adapter tubes 30, the mounting frame 1212 is provided with two mounting channels 1212b. Each mounting channel 1212b allows one adapter tube 30 to be inserted therein. In some embodiments, referring to FIG. 4, the two mounting channels 1212b are spaced apart along the third direction Z, and the two mounting channels 1212b both extend along the thickness direction Y of the second wall. For example, the thickness direction X of the thermal management component, the thickness direction Y of the second wall, and the third direction Z are perpendicular to each other.

The mounting channel 1212b extends to the hole wall surface of the mounting hole 1212a. In other words, one end of the mounting channel 1212b extends through the hole wall surface of the mounting hole 1212a, so that the mounting channel 1212b is in communication with the mounting hole 1212a, the first end 31 of the adapter tube 30 can extend into the mounting hole 1212a, and the first end 31 is in butt connection with the joint 1211b.

In these embodiments, the mounting channel 1212b is provided on the mounting frame 1212, the mounting channel 1212b extends through the hole wall surface of the mounting hole 1212a, and at least part of the adapter tube 30 extends through the mounting channel 1212b, so that the adapter tube 30 is in butt connection with the joint 1211b. The battery 100 with this structure enables a part of the adapter tube 30 to be located inside the mounting frame 1212. On the one hand, this can improve the stability and reliability of the adapter tube 30 mounted on the mounting frame 1212. On the other hand, the mounting frame 1212 can also provide a certain protective effect on the adapter tube 30, thereby reducing the risk of the adapter tube 30 being worn or bumped, and helping to prolong the service life of the adapter tube 30.

In some embodiments, referring to FIGs. 4 and 6, the mounting channel 1212b extends along the thickness direction Y of the second wall. The mounting channel 1212b has one end extending to the hole wall surface of the mounting hole 1212a and another end extending to an outer surface of the mounting frame 1212. In other words, two ends of the mounting channel 1212b in the thickness direction Y of the second wall extend through the hole wall surface of the mounting hole 1212a and the outer surface of the mounting frame 1212 respectively.

In these embodiments, the mounting channel is configured as a structure extending along the thickness direction Y of the second wall, and two ends of the mounting channel 1212b extend through the hole wall surface of the mounting hole 1212a and the outer surface of the mounting frame 1212 respectively, so that the adapter tube 30 can be assembled with the mounting frame 1212 simply by inserting the adapter tube 30 into the mounting channel 1212b along the thickness direction Y of the second wall, thereby helping to reduce the assembly difficulty between the adapter tube 30 and the mounting frame 1212.

According to some embodiments of this application, referring to FIGs. 5 and 6 and further referring to FIG. 8, FIG. 8 is a schematic structural diagram of a thermal management component 1211 according to some embodiments of this application. Along the thickness direction X of the thermal management component, the thermal management component 1211 has a first surface 1211c and a second surface 1211d disposed opposite each other. The first surface 1211c forms a part of the cavity wall surface of the assembly cavity 11. The joint 1211b is connected to the second surface 1211d. A projection of the joint 1211b in the thickness direction X of the thermal management component is located in the mounting hole 1212a.

The thermal management component 1211 has the first surface 1211c and the second surface 1211d disposed opposite each other. The first surface 1211c forms the part of the cavity wall surface of the assembly cavity 11. The joint 1211b is connected to the second surface 1211d. In other words, the joint 1211b is disposed on the side of the thermal management component 1211 facing away from the assembly cavity 11 in the thickness direction X of the thermal management component.

The projection of the joint 1211b in the thickness direction X of the thermal management component is located in the mounting hole 1212a. In other words, in the thickness direction X of the thermal management component, the projection of the joint 1211b does not overlap with a projection of the mounting frame 1212, so that the joint 1211b is not covered by the mounting frame 1212. It should be noted that the thermal management component 1211 is disposed in the mounting hole 1212a of the mounting frame 1212, in other words, the joint 1211b is a structure at least partially accommodated in the mounting hole 1212a.

In these embodiments, the joint 1211b is disposed on the side of the thermal management component 1211 facing away from the assembly cavity 11, and the projection of the joint 1211b in the thickness direction X of the thermal management component is set to be located in the mounting hole 1212a, so that the mounting frame 1212 can avoid the joint 1211b, thereby reducing the interference effect between the joint 1211b and the mounting frame 1212, facilitating subsequent maintenance of the joint 1211b, and facilitating assembly of the joint 1211b with other components, thereby helping to reduce the assembly difficulty between the joint 1211b and other components.

In some embodiments, referring to FIG. 6, the mounting frame 1212 has a third surface 1212c facing away from the assembly cavity 11 in the thickness direction X of the thermal management component. The mounting hole 1212a extends to the third surface 1212c. In the thickness direction X of the thermal management component, along a direction from the first surface 1211c to the second surface 1211d, the joint 1211b does not extend beyond the third surface 1212c.

The third surface 1212c is an outer surface of the mounting frame 1212 facing away from the assembly cavity 11 in the thickness direction X of the thermal management component.

Along the direction from the first surface 1211c to the second surface 1211d, the joint 1211b does not extend beyond the third surface 1212c. In other words, the joint 1211b is located in the mounting hole 1212a, and the joint 1211b does not protrude from the third surface 1212c of the mounting frame 1212 in the thickness direction X of the thermal management component. In other words, the joint 1211b is entirely located in the mounting hole 1212a.

In these embodiments, the joint 1211b is configured not to extend beyond the side of the mounting frame 1212 facing away from the assembly cavity 11 in the direction from the first surface 1211c to the second surface 1211d, so that the joint 1211b is entirely located in the mounting hole 1212a. Thus, the mounting frame 1212 can also provide a certain protective effect on the joint 1211b, reducing the phenomenon of the joint 1211b being worn or bumped, thereby helping to prolong the service life of the joint 1211b.

According to some embodiments of this application, referring to FIG. 7, the mounting hole 1212a includes a first hole segment 1212e and a second hole segment 1212f arranged along the thickness direction X of the thermal management component. The first hole segment 1212e is located on a side of the second hole segment 1212f close to the assembly cavity 11. A hole wall surface of the first hole segment 1212e and a hole wall surface of the second hole segment 1212f are connected to each other through a step surface 1212g. The step surface 1212g is disposed facing the assembly cavity 11. The thermal management component 1211 is located in the first hole segment 1212e, and the thermal management component 1211 abuts against the step surface 1212g.

The mounting hole 1212a includes the first hole segment 1212e and the second hole segment 1212f arranged along the thickness direction X of the thermal management component, and the first hole segment 1212e is located on the side of the second hole segment 1212f close to the assembly cavity 11. In other words, the mounting hole 1212a is a stepped hole structure, and the mounting hole 1212a includes at least two hole segments that are the first hole segment 1212e and the second hole segment 1212f respectively. The first hole segment 1212e is closer to the assembly cavity 11 than the second hole segment 1212f in the thickness direction X of the thermal management component.

The hole wall surface of the first hole segment 1212e and the hole wall surface of the second hole segment 1212f are connected through the step surface 1212g, and the step surface 1212g is disposed facing the assembly cavity 11. In other words, a projection of the hole wall surface of the second hole segment 1212f in the thickness direction X of the thermal management component is located in the first hole segment 1212e, so that the step surface 1212g facing the assembly cavity 11 is formed on the hole wall surface of the first hole segment 1212e and the hole wall surface of the second hole segment 1212f.

For example, in FIG. 7, the mounting hole 1212a includes only the first hole segment 1212e and the second hole segment 1212f connected to each other. In other words, the mounting hole 1212a of the stepped hole structure is provided with only two hole segments, and the two hole segments are the first hole segment 1212e and the second hole segment 1212f respectively. Certainly, in other embodiments, the number of hole segments of the mounting hole 1212a of the stepped hole structure may alternatively be three, four, five, or six, or the like. For example, in some embodiments, the mounting hole 1212a may further include other hole segments located on a side of the first hole segment 1212e facing away from the second hole segment 1212f or other hole segments located on a side of the second hole segment 1212f facing away from the first hole segment 1212e.

It should be noted that in the embodiments where the joint 1211b is disposed on the second surface 1211d of the thermal management component 1211 and the joint 1211b is entirely located in the mounting hole 1212a, the joint 1211b is a structure located in the second hole segment 1212f.

In these embodiments, the mounting hole 1212a has the first hole segment 1212e and the second hole segment 1212f arranged along the thickness direction X of the thermal management component. The hole wall surface of the first hole segment 1212e and the hole wall surface of the second hole segment 1212f are connected through the step surface 1212g. The step surface 1212g is disposed facing the assembly cavity 11 in the thickness direction X of the thermal management component. The thermal management component 1211 is disposed in the first hole segment 1212e and abuts against the step surface 1212g. On the one hand, this facilitates the mounting of the thermal management component 1211 in the mounting hole 1212a of the mounting frame 1212, thereby helping to reduce the assembly difficulty between the thermal management component 1211 and the mounting frame 1212. On the other hand, the step surface 1212g can also provide a certain limiting effect and positioning effect on the thermal management component 1211 in the thickness direction X of the thermal management component, thereby helping to improve the stability and reliability of the thermal management component 1211 mounted on the mounting frame 1212.

According to some embodiments of this application, referring to FIG. 7, the mounting frame 1212 has a third surface 1212c facing away from the assembly cavity 11 and a fourth surface 1212d facing the assembly cavity 11 in the thickness direction X of the thermal management component. The first hole segment 1212e extends to the fourth surface 1212d. The second hole segment 1212f extends to the third surface 1212c. In the thickness direction X of the thermal management component, along a direction from the third surface 1212c to the fourth surface 1212d, the thermal management component 1211 does not extend beyond the fourth surface 1212d.

The third surface 1212c is an outer surface of the mounting frame 1212 on the side of the thermal management component 1211 facing away from the assembly cavity 11. The fourth surface 1212d is the fourth surface 1212d of the mounting frame 1212 on the side of the thermal management component 1211 facing the assembly cavity 11, so that the fourth surface 1212d forms a part of the cavity wall surface of the assembly cavity 11.

The first hole segment 1212e extends to the fourth surface 1212d, and the second hole segment 1212f extends to the third surface 1212c. In other words, the mounting hole 1212a includes only the first hole segment 1212e and the second hole segment 1212f, and two ends of the mounting hole 1212a in the thickness direction X of the thermal management component extend through the third surface 1212c and the fourth surface 1212d respectively.

In the thickness direction X of the thermal management component, along the direction from the third surface 1212c to the fourth surface 1212d, the thermal management component 1211 does not exceed beyond the fourth surface 1212d. In other words, the thermal management component 1211 does not protrude from the fourth surface 1212d of the mounting frame 1212 facing the assembly cavity 11, so that the thermal management component 1211 is entirely located in the first hole segment 1212e.

In these embodiments, the thermal management component 1211 is configured not to extend beyond the side of the mounting frame 1212 facing the assembly cavity 11 in the direction from the third surface 1212c to the fourth surface 1212d. In other words, the thermal management component 1211 does not extend beyond an end of the mounting hole 1212a extending through the fourth surface 1212d in the thickness direction X of the thermal management component, so that the phenomenon of the thermal management component 1211 protruding from the fourth surface 1212d of the mounting frame 1212 can be alleviated, thereby helping to improve the protective effect of the mounting frame 1212 on the thermal management component 1211.

In some embodiments, still referring to FIG. 7, along the thickness direction X of the thermal management component, the thermal management component 1211 has a first surface 1211c facing the assembly cavity 11. The first surface 1211c is flush with the fourth surface 1212d.

The first surface 1211c is flush with the fourth surface 1212d. In other words, the surface of the thermal management component 1211 facing the assembly cavity 11 is coplanar with a surface of the mounting frame 1212 facing the assembly cavity 11. That is, the first surface 1211c is coplanar with the fourth surface 1212d.

In these embodiments, the first surface 1211c of the thermal management component 1211 facing the assembly cavity 11 and the fourth surface 1212d of the mounting frame 1212 facing the assembly cavity 11 are set as structures that are flush with each other. On the one hand, manufacturing and processing are facilitated. On the other hand, the phenomenon of unevenness of the cavity wall surface of the assembly cavity 11 can be reduced, thereby helping to reduce the risk of collision between the battery cell 20 and a sharp part of the mounting frame 1212 or a sharp part of the thermal management component 1211.

According to some embodiments of this application, referring to FIGs. 4 and 5, the box 10 may further include a support member 123. The support member 123 is disposed in the mounting hole 1212a and connected to the hole wall surface of the mounting hole 1212a. Along the thickness direction X of the thermal management component, the support member 123 is located on the side of the thermal management component 1211 facing away from the assembly cavity 11 and abuts against the thermal management component 1211. Projections of the support member 123 and the joint 1211b in the thickness direction X of the thermal management component do not overlap with each other.

The support member 123 is located on the side of the thermal management component 1211 facing away from the assembly cavity 11 and abuts against the thermal management component 1211. In other words, the thermal management component 1211 is located on a side of the support member 123 facing the assembly cavity 11, and the thermal management component 1211 abuts against the support member 123 along the thickness direction X of the thermal management component.

The projections of the support member 123 and the joint 1211b in the thickness direction X of the thermal management component do not overlap with each other. That is, the support member 123 does not cover the joint 1211b in the thickness direction X of the thermal management component. In other words, the support member 123 divides the mounting hole 1212a into a plurality of chambers, and the joint 1211b is located in the chamber, so that the joint 1211b does not overlap with the support member 123 in the thickness direction X of the thermal management component.

Optionally, the support member 123 may have various structures and shapes. For example, in FIG. 4, the support member 123 is a plate-shaped structure extending along the third direction Z, and two ends of the support member 123 in the third direction Z are both connected to the hole wall surface of the mounting hole 1212a.

Optionally, one or more support members 123 are disposed in the mounting hole 1212a. For example, in FIG. 4, only one support member 123 is disposed in the mounting hole 1212a. Certainly, in other embodiments, the number of support members 123 disposed in the mounting hole 1212a may alternatively be two, three, four, five, or the like. It should be noted that in an embodiment where a plurality of support members 123 are disposed in the mounting hole 1212a, the plurality of support members 123 may be structures intersecting with and connected to each other, or the plurality of support members 123 may alternatively be structures spaced apart along the thickness direction Y of the second wall or along the third direction Z.

In these embodiments, the support member 123 is disposed in the mounting hole 1212a, and the support member 123 is located on the side of the thermal management component 1211 facing away from the assembly cavity 11 in the thickness direction X of the thermal management component and abuts against the thermal management component 1211, so that the support member 123 can also provide a certain supporting effect on the thermal management component 1211, thereby helping to reduce the risks such as deformation of the thermal management component 1211 during use. In addition, the support member 123 can also provide a certain protective effect on the thermal management component 1211, helping to alleviate the phenomenon of direct collision between the thermal management component 1211 and the external environment. Moreover, the projections of the support member 123 and the joint 1211b in the thickness direction X of the thermal management component are set not to overlap with each other, so that the interference effect between the support member 123 and the joint 1211b can also be reduced.

According to some embodiments of this application, the thermal management component 1211 is welded to the mounting frame 1212. Certainly, in other embodiments, the thermal management component 1211 may alternatively be connected to the mounting frame 1212 through a bolted connection structure, a snap-fitting structure, a bonding structure, or the like.

In these embodiments, the thermal management component 1211 is welded to the mounting frame 1212, helping to improve the connection reliability between the thermal management component 1211 and the mounting frame 1212, thereby improving the stability and reliability of the thermal management component 1211 assembled on the mounting frame 1212.

According to some embodiments of this application, the joint 1211b is welded to the thermal management component 1211. The joint 1211b may alternatively be connected to the thermal management component 1211 through a bolted connection structure, a snap-fitting structure, a bonding structure, or the like.

In these embodiments, the joint 1211b is welded to the thermal management component 1211, helping to improve the connection reliability between the joint 1211b and the thermal management component 1211, thereby improving the stability and reliability of the joint 1211b assembled on the thermal management component 1211.

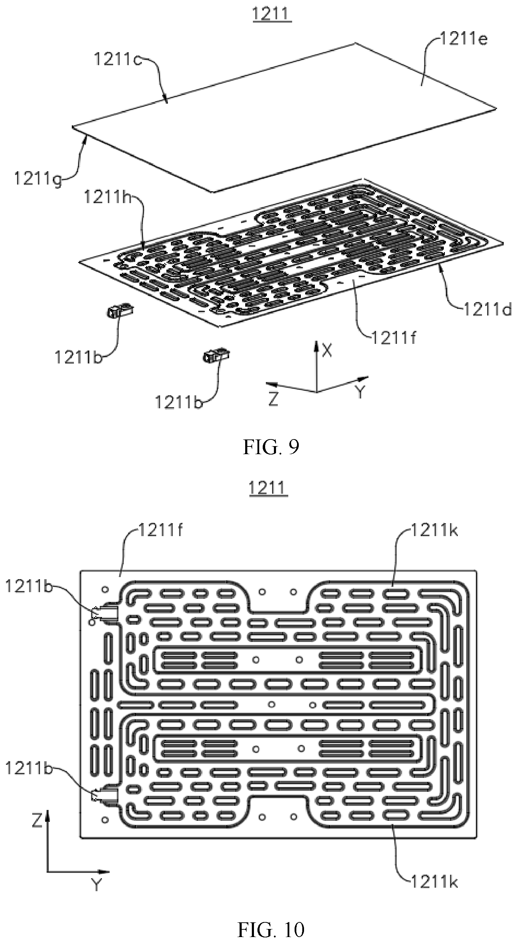

According to some embodiments of this application, referring to FIG. 8 and further referring to FIG. 9, FIG. 9 is an exploded view of a structure of a thermal management component 1211 according to some embodiments of this application. The thermal management component 1211 includes a first plate body 1211e and a second plate body 1211f. The first plate body 1211e and the second plate body 1211f are stacked and connected along the thickness direction X of the thermal management component. The first plate body 1211e and the second plate body 1211f jointly define the flow channel 1211a.

The first plate body 1211e and the second plate body 1211f are stacked and connected along the thickness direction X of the thermal management component. Various connection structures may be provided for the first plate body 1211e and the second plate body 1211f, such as a welding structure or a bonding structure.

The first plate body 1211e and the second plate body 1211f jointly define the flow channel 1211a. In other words, the flow channel 1211a is formed between the first plate body 1211e and the second plate body 1211f.

In these embodiments, the thermal management component 1211 is provided with the first plate body 1211e and the second plate body 1211f that are stacked and connected along the thickness direction X of the thermal management component, and the first plate body 1211e and the second plate body 1211f jointly define the flow channel 1211a for accommodating the heat exchange medium, so that the flow channel 1211a is formed inside the thermal management component 1211. The thermal management component 1211 with this structure has a simple structure and is convenient to process and manufacture.

According to some embodiments of this application, still referring to FIGs. 7, 8, and 9, along the thickness direction X of the thermal management component, the first plate body 1211e has a first plane 1211g facing the second plate body 1211f. A groove 1211h is provided on a side of the second plate body 1211f facing the first plate body 1211e. A groove wall surface of the groove 1211h and the first plane 1211g jointly define the flow channel 1211a.

The groove wall surface of the groove 1211h and the first plane 1211g jointly define the flow channel 1211a. That is, the first plane 1211g covers an opening of the groove 1211h, so that the flow channel 1211a is formed between the first plane 1211g and the groove wall surface of the groove 1211h. In other words, the flow channel 1211a is formed in a region of the interior of the thermal management component 1211 corresponding to the groove 1211h. The first plane 1211g is a flat and continuous surface. The first plane 1211g is perpendicular to the thickness direction X of the thermal management component.

It should be noted that the structure of the thermal management component 1211 is not limited to this. In other embodiments, the thermal management component 1211 may alternatively have other structures. For example, alternatively, the second plate body 1211f may have the first plane 1211g facing the first plate body 1211e, the groove 1211h is provided on a side of the first plate body 1211e facing the second plate body 1211f, and the groove wall surface of the groove 1211h and the first plane 1211g jointly define the flow channel 1211a. Alternatively, the groove 1211h is provided on each of the side of the first plate body 1211e facing the second plate body 1211f and the side of the second plate body 1211f facing the first plate body 1211e, and the groove 1211h of the first plate body 1211e and the groove 1211h of the second plate body 1211f are arranged correspondingly in the thickness direction X of the thermal management component, so that the groove wall surface of the groove 1211h of the first plate body 1211e and the groove wall surface of the groove 1211h of the second plate body 1211f jointly define the flow channel 1211a.

In these embodiments, the groove 1211h is provided on the side of the second plate body 1211f facing the first plate body 1211e, so that after the first plate body 1211e and the second plate body 1211f are stacked and connected to each other, the first plane 1211g of the first plate body 1211e and the groove wall surface of the groove 1211h of the second plate body 1211f can jointly form the flow channel 1211a of the thermal management component 1211. The structure is simple and easy to implement, and has high processing efficiency.

In some embodiments, referring to FIG. 9 and further referring to FIG. 10, FIG. 10 is a front view of a thermal management component 1211 according to some embodiments of this application facing a second plate body 1211f in a first direction. Along the thickness direction X of the thermal management component, a protrusion 1211k is formed on a side of the second plate body 1211f facing away from the first plate body 1211e at a position corresponding to the groove 1211h.

For example, the groove 1211h provided on the side of the second plate body 1211f facing the first plate body 1211e is formed by a stamping process, so that the groove 1211h is formed on the side of the second plate body 1211f facing the first plate body 1211e, and the protrusion 1211k is formed on the side of the second plate body 1211f facing away from the first plate body 1211e at the position corresponding to the groove 1211h. Certainly, a processing method of the groove 1211h provided on the side of the second plate body 1211f facing the first plate body 1211e is not limited to this. In other embodiments, the groove 1211h provided on the side of the second plate body 1211f facing the first plate body 1211e may also be formed by a processing technique such as casting, milling, or etching.

In these embodiments, the protrusion 1211k is provided on the side of the second plate body 1211f facing away from the first plate body 1211e along the thickness direction X of the thermal management component at the position corresponding to the groove 1211h, so that the groove 1211h is a structure that can be formed on the second plate body 1211f by a stamping process, thereby helping to reduce the difficulty of forming the groove 1211h on the second plate body 1211f, and helping to improve the difficulty of processing and forming the groove 1211h on the second plate body 1211f.

In some embodiments, referring to FIGs. 7 and 9, along the thickness direction X of the thermal management component, the second plate body 1211f is located on a side of the first plate body 1211e facing away from the assembly cavity 11. In other words, in the thickness direction X of the thermal management component, the second plate body 1211f and the assembly cavity 11 are located on two sides of the first plate body 1211e respectively.

It should be noted that in the embodiments where the thermal management component 1211 has the first surface 1211c facing the assembly cavity 11, a surface of a side of the first plate body 1211e facing away from the second plate body 1211f in the thickness direction X of the thermal management component is the first surface 1211c.

In these embodiments, the second plate body 1211f is disposed on the side of the first plate body 1211e facing away from the assembly cavity 11, so that the protrusion 1211k formed by the second plate body 1211f is located outside the assembly cavity 11, thereby allowing a surface of the first plate body 1211e facing the assembly cavity 11 to be set as a plane. The battery 100 with this structure can reduce the interference effect between the protrusion 1211k on the second plate body 1211f and the battery cell 20 accommodated in the assembly cavity 11, thereby helping to reduce the difficulty of assembling the battery cell 20 in the assembly cavity 11.

According to some embodiments of this application, referring to FIGs. 2 and 3, the box 10 includes a first box body 12 and a second box body 13. The first box body 12 and the second box body 13 fit each other along the thickness direction X of the thermal management component to jointly define the assembly cavity 11. The first box body 12 includes the first wall 121.

The first box body 12 includes the first wall 121. In other words, the first wall 121 is a part of the first box body 12.

In these embodiments, the box 10 is set to include the first box body 12 and the second box body 13, and the first box body 12 and the second box body 13 fit each other along the thickness direction X of the thermal management component to jointly define the assembly cavity 11, so that the box 10 with this structure can reduce the difficulty of assembling the battery cell 20 into the assembly cavity 11 of the box 10 and can reduce the manufacturing difficulty of the box 10.

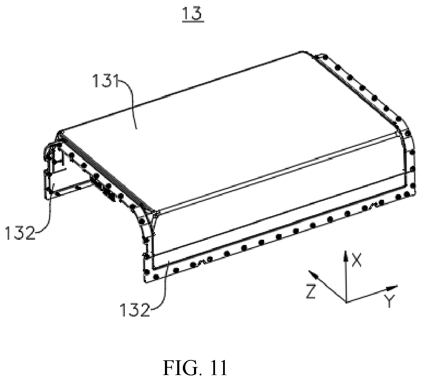

In some embodiments, referring to FIGs. 2, 3, and 4 and further referring to FIG. 11, FIG. 11 is a schematic structural diagram of a second box body 13 of a box 10 according to some embodiments of this application. The first box body 12 further includes two second walls 122. The two second walls 122 are both connected to the first wall 121. The second box body 13 includes a third wall 131 and two fourth walls 132. The two fourth walls 132 are both connected to the third wall 131. The first wall 121 and the third wall 131 are disposed opposite each other in a first direction. The two second walls 122 are disposed opposite each other in a second direction. The two fourth walls 132 are disposed opposite each other in a third direction Z. The first direction is parallel to the thickness direction X of the thermal management component; and the first direction, the second direction, and the third direction Z are perpendicular to each other.

The first direction is parallel to the thickness direction X of the thermal management component. The second direction is parallel to the thickness direction Y of the second wall. The third direction Z is parallel to the thickness direction of the fourth wall 132. In other words, the first wall 121 and the third wall 131 are disposed opposite each other in the thickness direction X of the thermal management component. That is, the thermal management component 1211 and the third wall 131 are disposed opposite each other in the thickness direction X of the thermal management component. The two second walls 122 are disposed opposite each other in the thickness direction Y of the second wall, and the two fourth walls 132 are disposed opposite each other in the thickness direction of the fourth wall 132.

For example, the two second walls 122 are both connected to a side of the first wall 121 facing the third wall 131 in the thickness direction X of the thermal management component. Similarly, various connection structures may be provided between the second wall 122 and the first wall 121, such as a welding structure, a snap-fitting structure, or a bolted connection structure.

For example, the two fourth walls 132 are both connected to a side of the third wall 131 facing the first wall 121 in the thickness direction X of the thermal management component. The fourth wall 132 and the third wall 131 may be formed as an integrated structure. For example, the fourth wall 132 and the third wall 131 may be made by an integral forming process such as extrusion molding, casting, or stamping. Certainly, the fourth wall 132 and the third wall 131 may alternatively be separate structures. For example, the fourth wall 132 may be connected to the third wall 131 through a welding structure, a snap-fitting structure, a bolted connection structure, or the like.

In these embodiments, the first box body 12 includes the first wall 121 and the two second walls 122 connected to the first wall 121. The two second walls 122 are disposed opposite each other along the second direction. The second box body 13 includes the third wall 131 and the two fourth walls 132 connected to the third wall 131. The two fourth walls 132 are disposed opposite each other along the third direction Z, so that the first box body 12 and the second box body 13 are each formed as a structure similar to a "U" shape. Thus, on the one hand, this helps the first box body 12 and the second box body 13 to fit each other along the thickness direction X of the thermal management component to jointly define the assembly cavity 11 for accommodating the battery cell 20. On the other hand, this can reduce the manufacturing difficulty of the first box body 12 and the second box body 13 and facilitate subsequent maintenance of the battery cell 20 accommodated in the box 10, thereby helping to reduce the later maintenance difficulty of the battery 100.

In some embodiments, referring to FIGs. 2, 3, and 11, along the third direction Z, the first wall 121 is located between the two fourth walls 132, and two sides of the first wall 121 are respectively connected to the two fourth walls 132.

Along the third direction Z, the first wall 121 is located between the two fourth walls 132. In other words, the two fourth walls 132 form a structure that clamps the first wall 121 in the third direction Z.

Along the third direction Z, the two sides of the first wall 121 are respectively connected to the two fourth walls 132. In other words, two ends of the first wall 121 in the third direction Z abut against and are connected to the two fourth walls 132 respectively. For example, in the embodiments of this application, the fourth wall 132 is in bolted connection with the first wall 121. Certainly, in other embodiments, a connection structure between the fourth wall 132 and the first wall 121 may alternatively be a welding structure or a bonding structure.

In these embodiments, the first wall 121 is set as a structure located between the two fourth walls 132 in the third direction Z, and two sides of the first wall 121 in the third direction Z are respectively connected to the fourth walls 132, so that the two fourth walls 132 form a structure that clamps the first wall 121 in the third direction Z. On the one hand, this can improve the assembly stability between the first box body 12 and the second box body 13 of the box 10 and facilitate assembly and connection of the first wall 121 and the fourth wall 132 from the third direction Z, thereby reducing the assembly difficulty between the first wall 121 and the fourth wall 132. On the other hand, this allows a sealed interface between the first wall 121 and the fourth wall 132 to be a structure perpendicular to the third direction Z, thereby helping to improve the sealing effect between the first wall 121 and the fourth wall 132.

According to some embodiments of this application, this application further provides an electric apparatus. The electric apparatus includes the battery 100 according to any one of the above solutions, and the battery 100 is configured to provide electrical energy to the electric apparatus.

The electric apparatus may be any device or system using the battery 100 described above.

According to some embodiments of this application, referring to FIGs. 2 to 11, this application provides a battery 100. The battery 100 includes a box 10, a battery cell 20, an adapter tube 30, two limiting members 40, and two insulating members 50. An assembly cavity 11 is formed inside the box 10. The box 10 includes a first box body 12 and a second box body 13. The first box body 12 and the second box body 13 fit each other along a thickness direction X of a thermal management component and jointly define the assembly cavity 11. The first box body 12 further includes two second walls 122. The two second walls 122 are both connected to the first wall 121. The second box body 13 includes a third wall 131 and two fourth walls 132. The two fourth walls 132 are both connected to the third wall 131. The first wall 121 and the third wall 131 are disposed opposite each other in the thickness direction X of the thermal management component. The two second walls 122 are disposed opposite each other in a thickness direction Y of the second wall. The two fourth walls 132 are disposed opposite each other in a third direction Z. The first direction is parallel to the thickness direction X of the thermal management component. The thickness direction X of the thermal management component, the thickness direction Y of the second wall, and the third direction Z are perpendicular to each other. The battery cell 20 is accommodated in the assembly cavity 11. The first wall 121 includes a mounting frame 1212 and a thermal management component 1211. The mounting frame 1212 is provided with a mounting hole 1212a. The mounting hole 1212a extends through the mounting frame 1212 along the thickness direction X of the thermal management component. The thermal management component 1211 is disposed in the mounting hole 1212a and welded to the mounting frame 1212. The second wall 122 is connected to the mounting frame 1212. Along the thickness direction Y of the second wall, the second wall 122 is spaced apart from the thermal management component 1211. The mounting hole 1212a includes a first hole segment 1212e and a second hole segment 1212f arranged along the thickness direction X of the thermal management component. The first hole segment 1212e is located on a side of the second hole segment 1212f close to the assembly cavity 11. A hole wall surface of the first hole segment 1212e and a hole wall surface of the second hole segment 1212f are connected to each other through a step surface 1212g. The step surface 1212g is disposed facing the assembly cavity 11. The thermal management component 1211 is located in the first hole segment 1212e, and the thermal management component 1211 abuts against the step surface 1212g. The thermal management component 1211 is configured to manage the temperature of the battery cell 20. A flow channel 1211a is formed inside the thermal management component 1211. The flow channel 1211a is configured to accommodate a heat exchange medium. Along the thickness direction X of the thermal management component, the thermal management component 1211 has a first surface 1211c and a second surface 1211d disposed opposite each other. The first surface 1211c forms a part of a cavity wall surface of the assembly cavity 11. The joint 1211b is welded to the second surface 1211d. The joint 1211b is in communication with the flow channel 1211a. A projection of the joint 1211b in the thickness direction X of the thermal management component is located in the mounting hole 1212a. The mounting frame 1212 has a third surface 1212c facing away from the assembly cavity 11 and a fourth surface 1212d facing the assembly cavity 11 in the thickness direction X of the thermal management component. The first hole segment 1212e extends to the fourth surface 1212d. The second hole segment 1212f extends to the third surface 1212c. The joint 1211b does not extend beyond the third surface 1212c. The first surface 1211c is flush with the fourth surface 1212d. The box 10 further includes a support member 123 disposed in the mounting hole 1212a and connected to a hole wall surface of the mounting hole 1212a. Along the thickness direction X of the thermal management component, the support member 123 is located on a side of the thermal management component 1211 facing away from the assembly cavity 11 and abuts against the thermal management component 1211. Projections of the support member 123 and the joint 1211b in the thickness direction X of the thermal management component do not overlap with each other. The thermal management component 1211 includes a first plate body 1211e and a second plate body 1211f. The first plate body 1211e and the second plate body 1211f are stacked and connected along the thickness direction X of the thermal management component. Along the thickness direction X of the thermal management component, the second plate body 1211f is located on a side of the first plate body 1211e facing away from the assembly cavity 11. The first plate body 1211e has a first plane 1211g facing the second plate body 1211f. A groove 1211h is provided on a side of the second plate body 1211f facing the first plate body 1211e. A protrusion 1211k is provided on a side of the second plate body 1211f facing away from the first plate body 1211e at a position corresponding to the groove 1211h. A groove wall surface of the groove 1211h and the first plane 1211g jointly define the flow channel 1211a. The adapter tube 30 is configured to deliver the heat exchange medium. The adapter tube 30 is arranged on the mounting frame 1212. The adapter tube 30 has a first end 31 and a second end 32 opposite to each other. The first end 31 is in butt connection with the joint 1211b. The second end 32 is located on a side of the second wall 122 facing away from the thermal management component 1211 in the thickness direction Y of the second wall. The second end 32 is configured to be in communication with an external component. The mounting frame 1212 is provided with a mounting channel 1212b. The mounting channel 1212b extends along the thickness direction Y of the second wall. The mounting channel 1212b has one end extending to the hole wall surface of the mounting hole 1212a and another end extending to an outer surface of the mounting frame 1212. At least part of the adapter tube 30 extends through the mounting channel 1212b. The two limiting members 40 are both connected to the fourth surface 1212d of the mounting frame 1212 facing the assembly cavity 11 in the thickness direction X of the thermal management component. The two limiting members 40 are located between the thermal management component 1211 and the two second walls 122 in the thickness direction Y of the second wall respectively. A plurality of battery cells 20 are disposed between the two limiting members 40. The limiting member 40 is configured for the battery cell 20 to abut against along the thickness direction Y of the second wall. Each insulating member 50 is disposed between one limiting member 40 and the plurality of battery cells 20 in the thickness direction Y of the second wall. Along the thickness direction X of the thermal management component, the battery cell 20 is disposed in correspondence with the thermal management component 1211, and a projection of the insulating member 50 does not overlap with a projection of the thermal management component 1211. Along the thickness direction Y of the second wall, a spacing space 14 is formed between the limiting member 40 and the second wall 122. The spacing space 14 is used for accommodating a wiring harness or a battery management system of the battery 100. The limiting member 40 includes a first limiting portion 41 and a second limiting portion 42. The first limiting portion 41 and the second limiting portion 42 are stacked and connected to each other along the thickness direction X of the thermal management component. The second limiting portion 42 is connected to the fourth surface 1212d of a side of the mounting frame 1212 facing the assembly cavity 11, and the second limiting portion 42 and the mounting frame 1212 are formed as an integrated structure.

It should be noted that, without conflict, the embodiments and features in the embodiments in this application may be combined with each other.

The foregoing descriptions are merely preferred embodiments of this application, and are not intended to limit this application. Those skilled in the art may make various modifications and variations to this application. Any modifications, equivalent replacements, improvements, and the like made without departing from the spirit and principle of this application shall fall within the protection scope of this application.

## Claims

1. A battery, comprising:
a box with an assembly cavity formed inside; and
a battery cell, accommodated in the assembly cavity;
wherein the box has a first wall, the first wall comprises a thermal management component configured to manage temperature of the battery cell, a flow channel is formed inside the thermal management component, the flow channel is configured to accommodate a heat exchange medium, the thermal management component is provided with a joint, the joint is in communication with the flow channel, and the joint is located outside the assembly cavity.

2. The battery according to claim 1, wherein along a thickness direction of the thermal management component, the thermal management component has a first surface and a second surface disposed opposite each other, the first surface forms a part of a cavity wall surface of the assembly cavity, and the joint is connected to the second surface.

3. The battery according to claim 1 or 2, wherein the first wall further comprises:
a mounting frame, provided with a mounting hole, wherein the mounting hole extends through the mounting frame along a thickness direction of the thermal management component;
wherein the thermal management component is disposed in the mounting hole and connected to the mounting frame.

4. The battery according to claim 3, wherein the box further comprises:
a second wall connected to the mounting frame, wherein along a thickness direction of the second wall, the second wall is spaced apart from the thermal management component, and the thickness direction of the second wall is perpendicular to the thickness direction of the thermal management component.

5. The battery according to claim 4, wherein along the thickness direction of the thermal management component, a limiting member is connected to a side of the mounting frame facing the assembly cavity;
wherein the limiting member is located between the second wall and the thermal management component in the thickness direction of the second wall, and the limiting member is configured for the battery cell to abut against in the thickness direction of the second wall.

6. The battery according to claim 5, wherein the battery further comprises:
an insulating member disposed between the limiting member and the battery cell along the thickness direction of the second wall.

7. The battery according to claim 6, wherein along the thickness direction of the thermal management component, the battery cell is disposed in correspondence with the thermal management component, and a projection of the insulating member does not overlap with a projection of the thermal management component.

8. The battery according to any one of claims 5 to 7, wherein along the thickness direction of the second wall, a spacing space is formed between the limiting member and the second wall.

9. The battery according to any one of claims 4 to 8, wherein the battery further comprises:
an adapter tube configured to deliver the heat exchange medium, wherein the adapter tube is disposed on the mounting frame;
wherein the adapter tube has a first end and a second end opposite each other, the first end is in butt connection with the joint, the second end is located on a side of the second wall facing away from the thermal management component in the thickness direction of the second wall, and the second end is configured to be in communication with an external component.

10. The battery according to claim 9, wherein the mounting frame is provided with a mounting channel, and the mounting channel extends to a hole wall surface of the mounting hole;
wherein at least part of the adapter tube extends through the mounting channel.

11. The battery according to claim 10, wherein the mounting channel extends along the thickness direction of the second wall, and the mounting channel has one end extending to the hole wall surface of the mounting hole and another end extending to an outer surface of the mounting frame.

12. The battery according to any one of claims 3 to 11, wherein along the thickness direction of the thermal management component, the thermal management component has a first surface and a second surface disposed opposite each other, the first surface forms a part of a cavity wall surface of the assembly cavity, and the joint is connected to the second surface;
wherein a projection of the joint in the thickness direction of the thermal management component is located in the mounting hole.

13. The battery according to claim 12, wherein the mounting frame has a third surface facing away from the assembly cavity in the thickness direction of the thermal management component, and the mounting hole extends to the third surface;
wherein in the thickness direction of the thermal management component, along a direction from the first surface to the second surface, the joint does not extend beyond the third surface.

14. The battery according to any one of claims 3 to 13, wherein the mounting hole comprises a first hole segment and a second hole segment arranged along the thickness direction of the thermal management component, the first hole segment is located on a side of the second hole segment close to the assembly cavity, a hole wall surface of the first hole segment and a hole wall surface of the second hole segment are connected to each other through a step surface, and the step surface is disposed facing the assembly cavity;
wherein the thermal management component is located in the first hole segment, and the thermal management component abuts against the step surface.

15. The battery according to claim 14, wherein the mounting frame has a third surface facing away from the assembly cavity and a fourth surface facing the assembly cavity in the thickness direction of the thermal management component, the first hole segment extends to the fourth surface, and the second hole segment extends to the third surface;
wherein in the thickness direction of the thermal management component, along a direction from the third surface to the fourth surface, the thermal management component does not extend beyond the fourth surface.

16. The battery according to claim 15, wherein along the thickness direction of the thermal management component, the thermal management component has a first surface facing the assembly cavity, and the first surface is flush with the fourth surface.

17. The battery according to any one of claims 3 to 16, wherein the box further comprises:
a support member disposed in the mounting hole and connected to a hole wall surface of the mounting hole, wherein along the thickness direction of the thermal management component, the support member is located on a side of the thermal management component facing away from the assembly cavity and abuts against the thermal management component, and projections of the support member and the joint in the thickness direction of the thermal management component do not overlap with each other.

18. The battery according to any one of claims 3 to 17, wherein the thermal management component is welded to the mounting frame.

19. The battery according to any one of claims 1 to 18, wherein the joint is welded to the thermal management component.

20. The battery according to any one of claims 1 to 19, wherein the thermal management component comprises a first plate body and a second plate body, the first plate body and the second plate body are stacked and connected along the thickness direction of the thermal management component, and the first plate body and the second plate body jointly define the flow channel.

21. The battery according to claim 20, wherein along the thickness direction of the thermal management component, the first plate body has a first plane facing the second plate body, a groove is provided on a side of the second plate body facing the first plate body, and a groove wall surface of the groove and the first plane jointly define the flow channel.

22. The battery according to claim 21, wherein along the thickness direction of the thermal management component, a protrusion is formed on a side of the second plate body facing away from the first plate body at a position corresponding to the groove.

23. The battery according to claim 22, wherein along the thickness direction of the thermal management component, the second plate body is located on a side of the first plate body facing away from the assembly cavity.

24. The battery according to any one of claims 1 to 23, wherein the box comprises a first box body and a second box body, the first box body and the second box body fit each other along the thickness direction of the thermal management component to jointly define the assembly cavity, and the first box body comprises the first wall.

25. The battery according to claim 24, wherein the first box body further comprises two second walls, the two second walls are both connected to the first wall, the second box body comprises a third wall and two fourth walls, and the two fourth walls are both connected to the third wall;
wherein the first wall and the third wall are disposed opposite each other in a first direction, the two second walls are disposed opposite each other in a second direction, the two fourth walls are disposed opposite each other in a third direction, the first direction is parallel to the thickness direction of the thermal management component, and the first direction, the second direction, and the third direction are perpendicular to each other.

26. The battery according to claim 25, wherein along the third direction, the first wall is located between the two fourth walls, and two sides of the first wall are respectively connected to the two fourth walls.

27. An electric apparatus, comprising the battery according to any one of claims 1 to 26, wherein the battery is configured to provide electrical energy.
